(19) **Europäisches Patentamt**

**European Patent Office**

**Office européen des brevets**

(11) **EP 1 204 551 B1**

(12) **EUROPEAN PATENT SPECIFICATION**

(45) Date of publication and mention
of the grant of the patent:
**12.07.2006 Bulletin 2006/28**

(51) Int Cl.:
***B64D 15/12*** *(2006.01)*

(21) Application number: **99960098.4**

(86) International application number:
**PCT/US1999/017640**

(22) Date of filing: **30.07.1999**

(87) International publication number:
**WO 2001/008463 (08.02.2001 Gazette 2001/06)**

(54) **AIRCRAFT DE-ICING SYSTEM**

VERFAHREN ZUR ENTEISUNG EINES FLUGZEUGES

DISPOSITIF DE DEGIVRAGE POUR AERONEF

(84) Designated Contracting States:
**AT BE CH CY DE DK ES FI FR GB GR IE IT LI LU MC NL PT SE**

(43) Date of publication of application:
**15.05.2002 Bulletin 2002/20**

(73) Proprietor: **Northcoast Technologies
Chardon, OH 44024 (US)**

(72) Inventors:
• **RUTHERFORD, Robert, B.
Kirtland, OH 44094 (US)**

• **DUDMAN, Richard, L.
Euclid, OH 44117 (US)**

(74) Representative: **Ricker, Mathias
Jones Day,
Rechtsanwälte,
Attorneys-at-Law,
Patentanwälte,
Prinzregentenstrasse 11
80538 München (DE)**

(56) References cited:
**WO-A-01/08973          DE-A- 4 333 852
FR-A- 2 756 254          GB-A- 2 319 943**

**Description**

This application is a continuation-in-part of U.S. Serial No. 08/935,165, filed September 22, 1997.

**BACKGROUND OF THE INVENTION**

Aircraft, during flight and/or while on the ground, may encounter atmospheric conditions that cause the formation of ice on airfoils and other surfaces of the aircraft structure, including wings, stabilizers, rudder, ailerons, engine inlets, propellers, rotors, fuselage and the like. Accumulating ice, if not removed, can add excessive weight to the aircraft and alter the airfoil configuration, causing undesirable and/or dangerous flying conditions. General aviation aircraft are particularly susceptible to the detrimental consequences of ice formation because only small amounts of ice on structural members, such as wings, tail, propellers, and the like, can significantly alter flight characteristics.

Since the earliest days of flight, attempts have been made to overcome the problem of ice accumulation, and mechanical, chemical and thermal de-ice and/or anti-ice systems have been developed for use in large commercial and military aircraft. Thermal systems include those in which bleed air or hot air from one of the compressor stages of a turbine aircraft are diverted to heat the airfoil leading edges. Other thermal systems employ electrically conductive resistance heating elements, such as those contained in heating pads bonded to the leading edges of the aircraft, or on the propeller or rotor blades, or incorporated into the structural members of the aircraft. Heating pads of this type usually consist of a thermally insulating material in contact with wire or other metal heating elements dispersed throughout the insulating layer. Because heat must be transferred from the metal heating elements to the surrounding insulating areas, these heaters are inefficient insofar as the energy and time required for heat up to a required temperature, and the time required for cool-down when the current is removed. Electrical energy for the heating elements is derived from a generating source driven by one or more of the aircraft engines or an auxiliary power unit. The electrical energy is continuously supplied to provide enough heat to prevent the formation of ice, or intermittently supplied to loosen accumulating ice. However, such systems are only usable where sufficient wattage is available to raise and/or maintain the temperature of the airfoil surface above the freezing point at typical aircraft speeds in icing conditions.

Electrothermal anti-ice and de-ice systems are classified as either evaporative or "running wet". Anti-ice evaporative systems supply enough heat to evaporate substantially all water droplets impinging upon the heated surface. The running wet de-icing systems, however, provide only enough heat to prevent freezing of the water droplets. The water then flows aft of the heated surface where it freezes, resulting in what is commonly known as runback ice. In "zoned" de-icing systems, runback ice is removed periodically by rapid application of sufficient heat to melt and loosen the ice bonded at the surface-ice interface; the bulk of the ice is then removed by aerodynamic or centrifugal forces.

In many heating pads used for electrothermal zoned de-icing systems, metal heating elements are configured as serpentine ribbons that form interconnected conductive segments. Because of the low electrical resistivity of metal heating elements, such as copper, aluminum, and the like, the serpentine configuration is designed to provide sufficient length to the element to achieve a high enough resistance to generate energy. Each ribbon is individually electrically energized by a pair of contacts, one on each end of the ribbon, and a current is transmitted through the ribbon by establishing a voltage differential between its corresponding pair of contacts, resulting in heating of the element. Heating pads such as these are described in U.S. Patents 5,475,204 and 5,657,951. One of the problems described in association with zoned de-icing systems employing heating pads of this type is that cold spots tend to develop at intersegmental gaps between the electrically conductive segments and at interheater gaps between adjacent zones. Ice formed at these cold spots can be very difficult to melt without the consumption of excessive current. Further, in this type of heating pad, each metallic heating element requires its own electrical terminations or contact strips. Because they are not heated, the melting of ice on or around the contact strips can also be very difficult. Accumulation of ice at the intersegmental and interheater gaps and around the contact strips is particularly undesirable since the accumulated ice can serve as an "anchor" for additional ice formation. In an attempt to address the problem of "cold spots", an electrothermal de-icing pad described in U.S. Patent No. 5,475,204 provides at least two heaters having conductive heating elements that are positioned relative to each other so that the marginal portions are overlapped in an attempt to eliminate gaps. However, as with other previously described electrothermal de-icing systems, these heaters have multiple heating zones containing a plurality of metallic heating elements, including a plurality of electrical terminations, requiring the use of complex control mechanisms that rely on multiple timers to control multiple zones.

The French publication FR 2 756 254 discloses a number of resistive elements, which are incorporated into an aerofoil in the vicinity of its leading edge. Each of the resistive elements is electrically connected to the other resistive elements at its distal end and is fitted at its proximal end with means of connection to an electrical power supply. The resistive elements are split between a first set that includes at least two resistive elements and a second set that includes at least one resistive element. In service, the resistive of the first set are powered in turn, while each resistive element of the second set acts as a return path for the electricity and is powered continuously or almost continuously.

As discussed above, the use of electrothermal heating pad systems is only feasible where sufficient wattage is available to raise and/or maintain the temperature of the airfoil surface above the freezing point at typical aircraft speeds in icing conditions. Because of the configuration of the metal elements in these pads, the watt densities are not uniformly distributed, resulting in substantial heating inefficiencies in terms of the average watt density provided. The power requirements for the anti-ice and/or de-ice systems using these metallic heating pads are large. Therefore, electrothermal systems that have been successfully used in large aircraft have been impractical for general aviation light aircraft, such as single engine and light twin airplanes and helicopters, because of power requirements that are in excess of the electrical power available. Moreover, auxiliary on-board power generating units for de-icing systems have not been employed in light aircraft because of the substantial weight and expense penalty that would be incurred.

Thus, there is a need for an ice protection system for all aircraft including general aviation light aircraft, that has sufficient operating efficiency to protect aircraft structural members, such as the wings, tail structures, propeller, rotor blades, and the like, against the accumulation of ice, that is light weight, that does not interfere with aircraft flight characteristics, and that is economical. More particularly, there is a need for an efficient thermoelectric heater system that can be "zoned" to provide an effective de-ice system in which electrical energy can be intermittently or continuously supplied to provide heat sufficient to prevent the formation of ice or to loosen accumulating ice.

Recently, technology has been developed to allow a light aircraft to be fitted with a 150 ampere to 200 ampere alternator producing 40 to 60 volts, without a significant weight penalty. It is now possible that a combination of a very efficient thermoelectric heater, in terms of the watt density provided by the heater, and such an alternator, could also allow general aviation aircraft to utilize reliable electrothermal in-flight anti-ice/de-ice systems.

## SUMMARY OF THE INVENTION

The invention provides an efficient electrothermal heater that can be used in a de-ice and/or anti-ice system for all aircraft, including general aviation light aircraft, because the watt densities provided by the heater are sufficient to melt or loosen accumulating ice using the power available in large aircraft or in light aircraft augmented with, if necessary, an on-board lightweight, high-output, auxiliary alternator, such as that described above. In particular, the invention provides a lightweight heat-conducting tape bonded to the surface of an aircraft structure that includes a leading edge, for electrothermally removing ice from or preventing the formation of ice on the surface during in-flight and/or on the ground icing conditions. Although the heat-conducting tape is herein described for use on aircraft surfaces, the tape may be used for any surface which requires anti-ice or de-ice capability and where a power source is available. Such applications include roofs, gutters, pipes, automobile hoods and trunks, and the like.

The heat-conducting tape comprises at least two layers laminated to each other under heat and pressure, *i.e.,* a non-metallic electrical and heat-conducting layer consisting of flexible expanded graphite foil, also known as vermiform graphite, laminated to an outer heat-conducting layer that is an electrical insulator and seals the interior of the tape against penetration and water damage. The tape is bonded (*e.g.,* by an adhesive) to an electrically insulating layer, such that the flexible expanded graphite layer is disposed between the heat-conducting outer layer and the insulating layer. The electrical insulating layer may be directly bonded to the tape to form a third layer before application to the aircraft surface. Alternatively, the electrical insulating layer may be a component of the aircraft surface to which the two-layer tape is applied.

One embodiment of the invention, employing such a heat-conducting tape having a uniform thickness for use as an anti-ice/de-ice system, is disclosed in our co-owned, co-pending U.S. Patent Application, Serial No. 08/935,165, filed September 22, 1997, and now allowed. The entire disclosure of the foregoing patent application is hereby incorporated by reference.

In the present embodiment of the invention, the heat-conducting tape is used in a zoned aircraft de-icing system. In this embodiment, the heat-conducting tape comprises a first area that forms a parting strip having a length disposed spanwise along the leading edge of an aircraft structure, a second area disposed above and aft of the parting strip forming a first ice accumulation and shedding zone, and a third area disposed below and aft of the parting strip, forming a second ice accumulation and shedding zone. As used herein, the terms "disposed spanwise", "disposed above" and "disposed below" are used in reference to a substantially horizontal aircraft structure (*e.g.,* a wing, a horizontal tail stabilizer, a helicopter rotor blade, and the like); but these terms are intended herein to be fully inclusive of a parting strip disposed along the length of a non-horizontal leading edge (*e.g.*, a vertical tail stabilizer, an aircraft propeller blade, and the like) and ice accumulation and shedding areas which are disposed on one side and/or an opposite side of the parting strip.

When, or preferably prior to, encountering in-flight icing conditions, sufficient power is supplied to the heat-conducting tape to maintain the temperature of the outer heat-conducting layer at the parting strip above 32°F (0°C), preferably about 35°F (1.6°C) to about 45°F (7.2°C), and the temperature of the outer layer of each of the ice accumulation and shedding zones at a temperature that does not exceed 32 °F (0°C), for a first time period. Water droplets impinging on the parting strip are prevented from freezing and allowed to run back to the outer layer of one or both of the ice accumulation and shedding zones, where they form ice and an ice-to-surface bond. The time period allowed for ice accumulation is about 10 seconds to about 5 minutes, depending on the rate of ice accretion under the icing conditions encountered. At the end of the first time period, sufficient power is applied to the heat-conducting tape for a second time period, to heat raise and maintain the temperature of the outer heat-conducting layer at the ice accumulation and shedding zones to a temperature greater than 32 °F (0°C), sufficient to melt the ice-to-surface bond and to allow the formed ice to be shed into an impinging airstream. Preferably the temperature is in a range of about 34°F (1.1°C) to about 40°F (4.4°C) and the second time period is about 5 seconds to about 60 seconds. The application of power for the second time period also increases the temperature of the parting strip. Due to the efficient thermal conductivity of the flexible expanded graphite foil, heat from the parting strip is conducted aft, into the ice accumulation and shedding zones, thus reducing the power required to raise the temperature in these zones. The cycle of runback freezing of the water droplets and intermittent ice removal is then repeated as often as necessary until icing conditions no longer exist.

A feature of this embodiment of the invention is that the flexible expanded graphite foil comprises a single, monolithic heating element that can be shaped, sculptured or layered in such a way as to vary the watt densities in the parting strip and the ice accumulation and shedding zones of the heating element in a predetermined manner. It is known that varying the length, width and/or thickness of flexible expanded graphite foil changes the electrical resistance along the length of the foil by a large magnitude and, as is known, the electrical resistance of a material determines the amount of electric current that will flow through the material. Consequently, for a given length and width, a section of the heat-conducting tape comprising a greater thickness of flexible expanded graphite foil has a lesser electrical resistance, a greater flow of current, and becomes hotter than sections in which the foil layer is thinner. In the zoned de-icing embodiment of the invention, the flexible expanded graphite foil layer of the heater has a thickness in the parting strip that is greater than the thickness of the foil in each of the first and the second ice accumulation and shedding zones. Therefore, the temperature of the parting strip exceeds the temperature of either of the two ice accumulation and shedding zones at all given power settings.

In a preferred embodiment, the flexible expanded graphite foil sheet is a continuous shaped sheet comprising a decreasing gradient of thicknesses between the parting strip and each of the ice accumulation and shedding zones. In another embodiment, the parting strip comprises at least two layered flexible expanded graphite foil sheets, and the layers are arranged to form a decreasing gradient of thicknesses between the parting strip and each of the ice accumulation and shedding zones. In yet another embodiment, the parting strip and one or both of the ice accumulation and shedding zones may be separate sections of the foil, but the ice accumulation and shedding sections are separated from the parting strip by a gap of no greater than 60 mils (1.524 mm). In this embodiment, one or more of the sections may be shaped to form a decreasing gradient of thicknesses between the parting strip section and the ice accumulation and shedding zones.

Regardless of the configuration of the flexible expanded graphite layer of the heat-conducting tape, a further feature of the zoned de-icing embodiment of the invention is that the flexible expanded graphite foil layer is preferably connected to the power source by a single set of two electrical terminals. A current is transmitted through the foil by establishing a voltage differential between its corresponding pair of terminals, resulting in heating of the foil. A given amount of power supplied to the flexible expanded graphite layer results in watt densities that differ between the parting strip and the ice accumulation and shedding zones, as governed by the predetermined thicknesses in these areas, and the temperature of the parting strip always exceeds that of the ice accumulation and shedding zones. Therefore, only a single control mechanism for a single set of electric terminals is necessary to produce desired watt densities and temperatures in the parting strip and ice accumulation and shedding zones, resulting in zoned de-icing system that is greatly simplified compared to previously known systems. Moreover, the use of only two terminals results in substantially fewer termination points or contact strips as potential cold spots that could detrimentally become anchor points for ice accumulation.

The heat-conducting outer layer may comprise any heat-conducting material that is essentially an electrical non-conductor. Preferably, the heat-conducting outer layer comprises a thermoplastic or thermoset material containing a heat-conducting inorganic filler. More preferably, the heat-conducting layer comprises a thermoplastic material, such as polyurethane, with a filler selected from aluminum nitride, boron nitride, alumina, and the like.

Flexible expanded graphite foil suitable for use in the heat-conducting tape of the invention is a readily commercially available material that is relatively inexpensive. The flexible expanded graphite foil has an electrical resistivity along its length and width of about $2.7 \times 10^{-4}$ ohm-in. ($6.86 \times 10^{-4}$ ohm-cm) to about $3.2 \times 10^{-4}$ ohm-in. ($8.13 \times 10^{-4}$ ohm-cm), with an average of about $3.1 \times 10^{-4}$ ohm-in., and is fully electrically conducting without the necessity of including wire elements, metals or heat-conducting fibers within or through the layer. Because of the continuous, monolithic configuration of the flexible expanded graphite foil, the watt density throughout the heat conducting tape is uniformly distributed. Thus, the heat-conducting tape of the invention is much more efficient than heating pads employing metal elements, and the measured watt densities are true watt densities rather than average watt densities. Because flexible expanded graphite foil is well suited, in terms of surface area to volume, for conducting heat and electricity, the wattage required for producing a rapid rise in temperature from ambient to that required for anti-ice and/or de-ice systems over a large surface area, is far less than that required by known electrical wire heating systems. In addition, flexible expanded graphite has a low thermal mass, enabling a rapid heat up and a rapid cool down when the current is removed.

The two- or three-layer heat-conducting tape is easily applied, using commercially available adhesives such as rubber-based adhesives, to any surface of the aircraft, including the fuselage, wings, ailerons, propeller or rotor blades, tail sections, including stabilizers and rudder, engine cowling, oil pan, and the like. In the zoned de-ice system described above, the tape is applied to an aircraft structure that includes a leading edge. The combination of the flexibility of the expanded graphite, the heat-conducting outer layer, with or without a flexible electrically insulating layer, provides a heat-conducting tape that is easy to die cut to size and configure to a variety of aircraft structural shapes, including control surfaces and other irregularly shaped removable and movable components. The heat-conducting tape is also light in weight and inexpensive compared to existing de-ice and anti-ice systems.

## BRIEF DESCRIPTION OF THE DRAWINGS

**Figure 1** is a schematic illustration of a single engine aircraft having the heat-conducting tape of the invention bonded to the leading edges of the wings, rudder and stabilizers.

**Figure 2** is a schematic illustration of a propeller blade having the heat-conducting tape bonded to a leading edge.

**Figure 3A** is a schematic illustration of a jet aircraft having the heat-conducting tape bonded to the leading edges of the wings, rudder and stabilizers.

**Figure 3B** is a schematic illustration of further areas to which the heat-conducting tape may be bonded to an aircraft, such as the leading edges of the wings, rudder, stabilizers, engine air inlets, auxiliary air inlets, propellers, antennas, balance horns, essential instruments and radome.

**Figure 4** is a schematic illustration of the components of the heat-conducting tape, including the flexible expanded graphite layer, the heat-conducting outer layer and the electrically insulating layer.

**Figure 5** is a cross section of the three-layer heat-conducting tape illustrating the flexible expanded graphite layer disposed between the heat-conducting outer layer and the insulating layer.

**Figure 6** is a schematic cut-away illustration of a wing section having the heat-conducting tape of the invention bonded to a portion of the leading edge surface.

**Figure 7** is a schematic illustration of a power source and a programmable power control electronically connected to the flexible expanded graphite layer of the heat-conducting tape and a temperature sensor, respectively.

**Figure 8** is an electrothermal de-icer according to the prior art mounted on a structural member in the form of a wing.

**Figure 9** is a schematic illustration of the heat-conducting tape of the zoned electrothermal de-icing system embodiment of the invention, bonded to the leading edge of an aircraft structure, such as a wing.

**Figure 10** is a schematic illustration of one embodiment of the flexible expanded graphite foil layer of the heat-conducting tape of the de-icing system embodiment.

**Figure 11** is a schematic cross-sectional view of the heat-conducting tape of Figure 10, bonded to the leading edge of a wing.

**Figure 12** is a schematic cross-sectional view of another embodiment of the heat-conducting tape of Figure 10, bonded to the leading edge of a wing.

**Figure 13** is a schematic illustration of another embodiment of the flexible expanded graphite foil layer of the heat-conducting tape of the de-icng system embodiment.

**Figure 14** is a schematic cross-sectional view of the heat-conducting tape of Figure 13, bonded to the leading edge of a wing.

**Figure 15** is a schematic illustration of another embodiment of the flexible expanded graphite foil layer of the heat-conducting tape of the de-icing system embodiment.

**Figure 16** is a schematic cross-sectional view of the heat-conducting tape of Figure 15, bonded to the leading edge of a wing.

**Figure 17** is a schematic illustration of an embodiment of the invention wherein the heat-conducting tape is bonded to the leading edge of a helicopter rotor blade or a propeller blade.

**Figure 18** is a schematic cross-sectional view of an embodiment of the heat-conducting tape comprising an outer erosion-resistant layer, bonded to the leading edge of a helicopter rotor blade or a propeller blade.

**Figure 19** is a graph of the resistivity of Grafoil® Brand Flexible Expanded Graphite versus density.

**Figure 20** is a graph of the resistance of Grafoil® versus thickness.

**Figure 21** is a histogram illustrating the resistance of Grafoil® versus thickness and density.

**Figure 22** is a histogram illustrating the time to heat Grafoil® of various thicknesses and densities to 125°F (51.7°C).

**Figure 23** is a histogram illustrating the time for Grafoil® of various thickness and densities to cool down from 123°F to 82°F (51.7°C to 27.8°C).

**Figure 24** is a histogram comparing the time to heat up and time to cool down of Grafoil® versus a Veratec material.

**Figure 25** is a three-dimensional schematic illustration of the power requirements to heat Grafoil® having different thicknesses bonded to a composite laminar flow wing from a Vantage® aircraft.

**Figure 26** is a histogram illustrating the heat transfer between in a simulated parting zone and ice accumulation and shedding zones, when the parting zone only was powered.

**Figure 27** is a histogram illustrating the temperatures of the simulated parting zone and ice accumulation and shedding zones, when all zones were powered.

**Figure 28** is a figure reproduced from the Aircraft Icing Handbook, Report #DOT/FAA/CT-88/8-2 illustrating atmospheric icing design conditions for stratiform clouds.

**Figure 29** is a schematic illustration of the location of seven thermocouples on the leading edge of a Cessna 182-R wing to which the heat-conducting tape was bonded.

**Figure 30** is a schematic illustration of the location of six thermocouples on the leading edge of a Lancair IV wing to which the heat-conducting tape was bonded.

**Figure 31** is a graph of the watt densities versus the temperature of the outer surface of the heat-conducting layer of the tape under four different sets of atmospheric conditions.

**Figure 32** is a histogram of the watt densities versus the temperature of the outer surface of the heat-conducting layer of the tape under four different sets of atmospheric conditions.

**Figure 33** is a graph illustrating the time to heat and time to cool the outer surface of the heat-conducting layer of the tape under a set of atmospheric conditions.

**Figure 34** is a graph illustrating the watt densities required to raise the temperatures of the parting strip zone, and the first and second ice accumulation and shedding zones.

**Figure 35** is a graph illustrating a power off condition in a single de-icing sequence.

**Figure 36** is a digital photograph showing runback ice forming on an ice accumulation and shedding zone of the heat-conducting tape bonded to the leading edge of a Lancair IV wing.

**Figure 37** is a graph illustrating a power on condition in the single de-icing sequence.

**Figure 38** is a digital photograph showing the initial shedding of the runback ice of Figure 36.

**Figure 39** is a graph illustrating time following the power on condition of Figure 37.

**Figure 40** is a digital photograph showing the removal of the runback ice of Figure 39.

## DESCRIPTION OF THE INVENTION

In a first embodiment of the invention disclosed in our copending U.S. Patent Application Serial No. 08/935,165, an electrothermal system for removal of ice from or prevention of the formation of ice on an outer surface of an aircraft structure comprises a heat-conducting tape that comprises at least two layers laminated to each other under heat and pressure, the layers comprising (i) a non-metallic electrical and heat-conducting layer consisting of a flexible expanded graphite foil sheet having a uniform thickness and disposed between an outer heat-conducting layer and an electrically insulating layer that is bonded to or is a component of the aircraft surface.

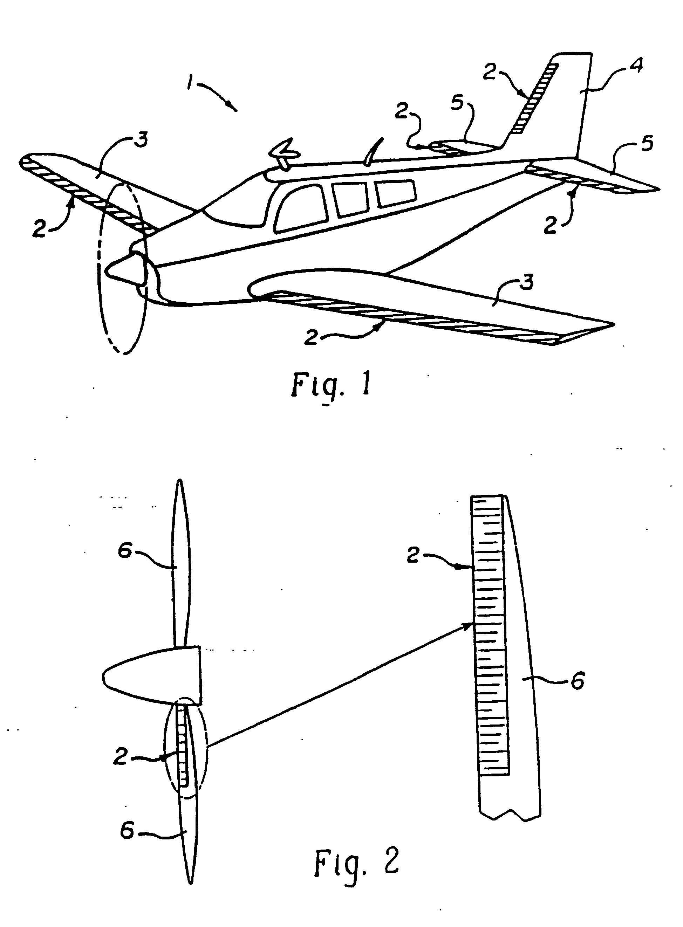

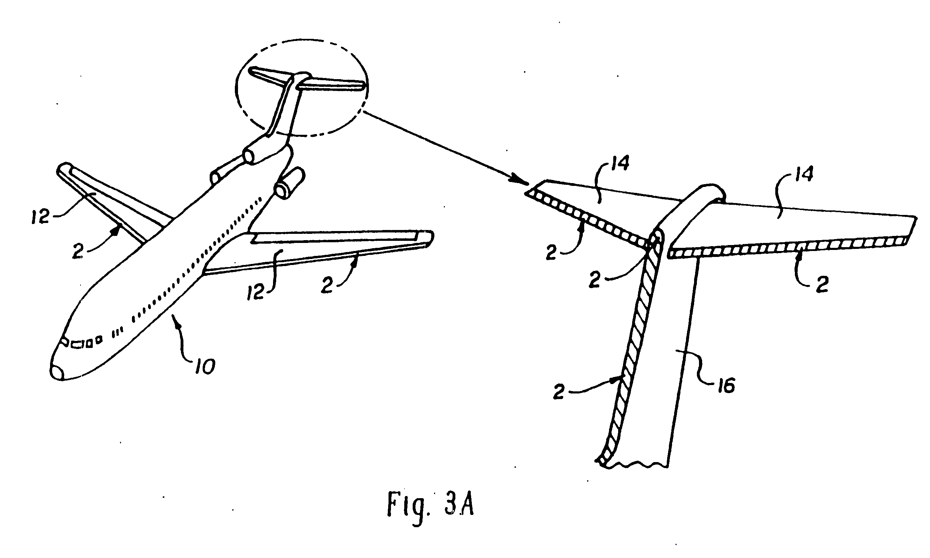

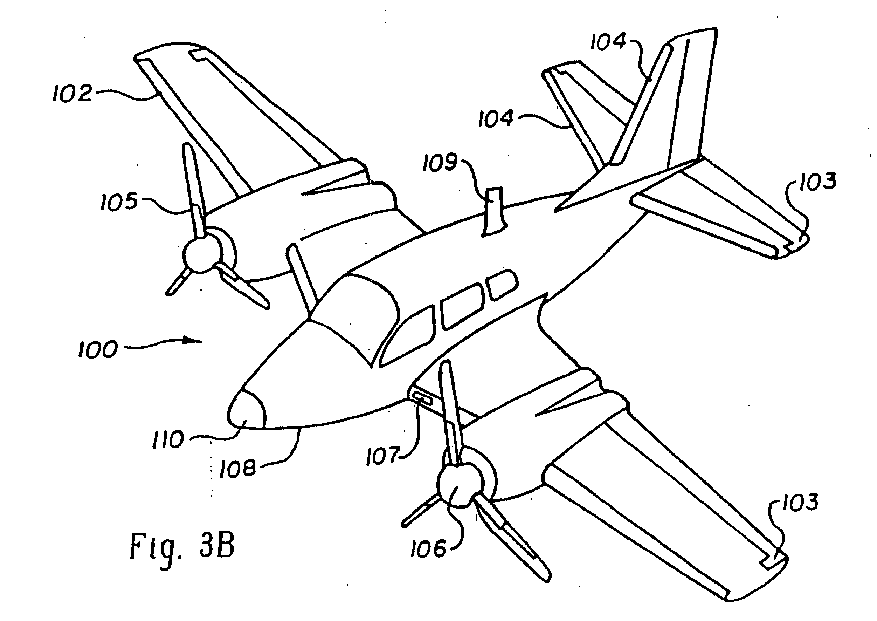

The heat-conducting tape of the first embodiment of the invention may be bonded to any surface or partial surface of any aircraft structure that is subject to the formation of ice. For example, as illustrated in **Figures 1** and **2,** structural areas to which the heat-conducting tape 2 of the first embodiment may be applied to a light aircraft 1 include, but are not limited to, the leading edges of the wings 3, rudder 4, stabilizers 5 and propeller blades 6, as well as other structures, such as the oil pan. As illustrated in **Figure 3A,** the heat-conducting tape 2 of the first embodiment may also be applied to any structural area subject to icing in a commercial aircraft 10 including, without limitation, the leading edges of the wings 12, stabilizers 14 and rudder 16 sections, as well as other surfaces, including ailerons, flaps, engine cowling, and the like. The tail structures on commercial aircraft have historically been the most susceptible to in-flight ice hazards.

As illustrated in **Figure 3B,** further structural areas to which the heat-conducting tape 2 of the first embodiment may be applied to a light aircraft, such as a twin engine aircraft 100 include, but are not limited to, the leading edges of the wings 102, empennage leading edges 104 of the rudder and stabilizers, balance horns . 103, propeller blades 105, engine air inlets 106, as well as other structures, including auxiliary air inlets 107, essential external instruments 108, antennas 109 and oil pan (not shown).

In the zoned de-icing system embodiment of the invention, the aircraft structure to which the heat-conducting tape may be applied includes, without limitation, any leading edge of the aircraft such as those illustrated in **Figures 1,2, 3A** and **3B** including the leading edges of the wings, empennage leading edges of the rudder and the vertical and horizontal tail stabilizers, and propeller blades, including helicopter rotor blades.

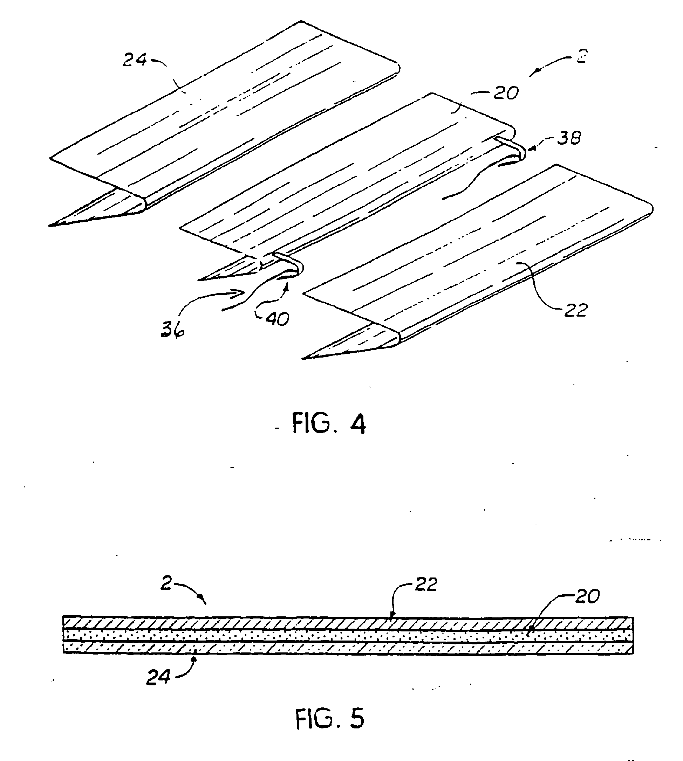

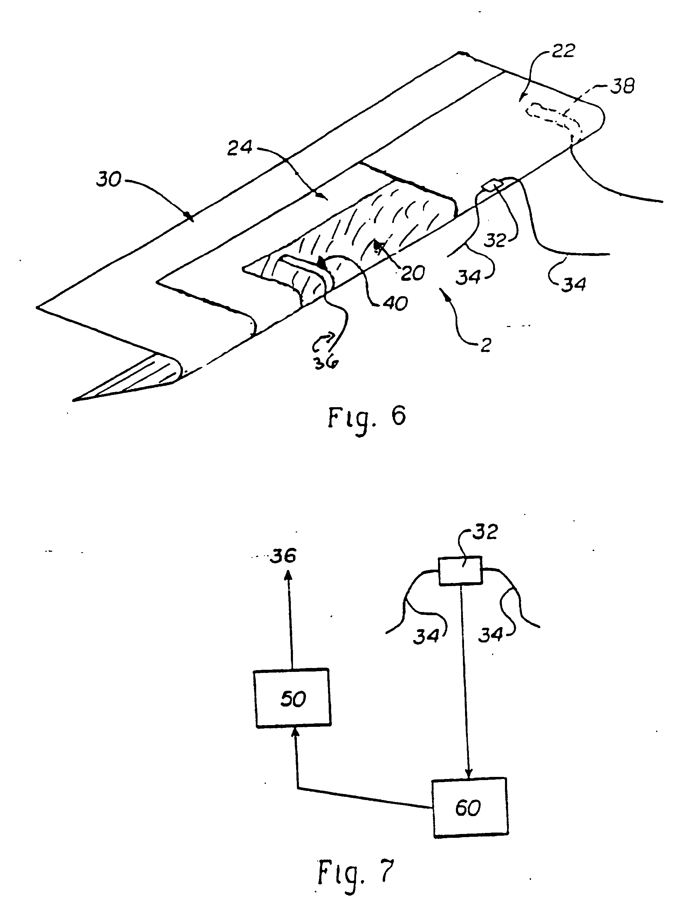

The structural components of the heat-conducting tape are generally illustrated in **Figures 4** and **5.** The heat-conducting tape 2 comprises a flexible expanded graphite foil layer 20 laminated to an outer heat-conducting layer 22 and disposed between the outer layer 22 and an electrically insulating layer 24. The flexible expanded graphite foil layer 20 is connectable to a power source by electrical terminal 40 which can be, for example, an edge connector or bus bar, or the like, and wiring system 36. Another edge connector or bus bar 38 is available for grounding the electrical circuit. In the first embodiment of the invention, the flexible expanded graphite foil is a sheet having a uniform thickness of about 0.003 (0.076 mm) to about 0.125 inches (3.175 mm), preferably about 0.025 (0.63 mm) to about 0.125 inches (3.175 mm), more preferably about 0.003 (0.076 mm) to about 0.070 inches (1.78 mm) and especially about 0.003 (0.076 mm) to about 0.030 inches (0.76 mm). In the zoned de-icing system embodiment of the invention, the thickness of the flexible expanded graphite foil layer 20 in the heat-conducting tape 2 varies in a predetermined manner in different areas of the tape, as described further below. The insulating layer 24 may be bonded to the flexible expanded graphite foil layer 20 by an adhesive, such as any rubber-based adhesive that maintains its bonding capability over a wide range of temperatures. An example of a readily available suitable adhesive is the rubber-based contact adhesive 1300-L (3M Company). Alternatively, the three layers of the heat-conducting tape may be laminated to each other under heat and pressure. For example, the area of outer heat-conducting layer may be larger than the area of the flexible expanded graphite foil sheet layer 20, and may be laminated directly to the insulating layer 24. The insulating layer 24 is bonded directly to an aircraft surface such as a leading edge section of an aluminum wing 30, as illustrated in a cut-away schematic in **Figure 6,** also by means of an adhesive, such as the foregoing rubber-based contact adhesive.

When the aircraft structure already has an electrically insulating component, a two-part heat-conducting tape may be used that comprises the flexible expanded graphite layer 20 and the heat-conducting outer layer 22. For example, the aircraft surface may be painted or otherwise coated with an electrically insulating material, such as a polyurethane paint or an aluminized paint. The flexible expanded graphite layer 20 and the heat-conducting outer layer 22 are then bonded directly to the insulating component of the aircraft structure, with a rubber-based adhesive. Alternatively, the aircraft structure itself may be manufactured of an electrically non-conducting composite, such as fiberglass reinforced plastic, or the like. In this case, the flexible expanded graphite foil sheet 20 may be embedded in the composite during its manufacture, by methods known to those skilled in the art of composites, and a heat-conducting outer layer may be later painted or sprayed on or bonded to the composite surface with an adhesive. In this embodiment, the flexible expanded graphite foil sheet is in close proximity to or in contact with the heat-conducting layer in order to transfer heat to this layer. Examples of suitable paint or spray-on heat-conducting layers include polyurethane-based or aluminized paints, that contain inorganic fillers, such as aluminum nitride.

Flexible expanded graphite foil for use in the heat-conducting tape may be prepared, as is well known, by expanding graphite flakes many times and then compressing the expanded flakes to form a cohesive structure. The expansion of graphite flakes can be readily achieved by attacking the bonding forces between the layers of the internal structure of graphite, such as by the use of an acid. The result of such an attack is that the spacing between the superimposed layers can be increased so as to effect a marked expansion in the crystalline structure. By means of an intercalation or "between the layers" compound formation, subsequent high temperature heating effects a 100-1000 fold greater expansion, producing a worm-like or vermiform structure with highly active, dendritic, rough surfaces which may then be formed under pressure into a foam material, since the particles have the ability to adhere without a binder due to the large expansion. Sheets, and the like, are formed from the expanded graphite particles by simply increasing the compressive pressure, the density of the formed graphite being related to the applied formation pressure. A more complete description of the method of forming such flexible expanded graphite sheets can be found in U.S. Patent No. 3,404,061.

The flexible expanded graphite sheet product is essentially pure graphite, typically 90-99.9% elemental carbon by weight, with a highly aligned structure. Only naturally occurring minerals (from the natural raw graphite materials) remain as impurities in the product in the form of essentially inert, chemically stable metal oxides and sulfate. The presence of these impurities is not essential to and does not contribute to the electrical and heat-conducting capabilities of the expanded graphite.

Although any suitable flexible expanded graphite foil sheet may be used in the present invention, it is preferred that the characteristics of the flexible expanded graphite sheet be equivalent to that provided as Grafoil® Brand Flexible Graphite, manufactured by UCAR Carbon Company. In the first embodiment of the invention, the density of the preferred flexible expanded graphite is about 50 (0.77 g/cm$^3$) to about 90 lbs./ft.$^3$ (1.39 g/cm$^3$), preferably about 70 lbs./ft.$^3$ (1.08 g/cm$^3$). In this embodiment, the preferred flexible expanded graphite foil has an electrical resistivity of about 1 x 10$^{-4}$ (2.54·10$^{-4}$) to about 10x10$^{-4}$ ohm-in (25.4·10$^{-4}$ ohm-cm), preferably about 2.8 x 10$^{-4}$ (7.1 x 10$^{-4}$) to about 7.5 x 10$^{-4}$ ohm-in. (19.5·10$^{-4}$ ohm-cm) and, more preferably, about 3.1 x 10$^{-4}$ (7.87 x 10$^{-4}$) to about 6.5 x 10$^{-4}$ ohm-in (16.5 x 10$^{-4}$ ohm-cm), and has a thermal conductivity of about 140 W/MK at 70°F (21.1°C) and about 44 W/MK at 2000°F (1093°C). Because of its excellent heat-conducting properties, flexible expanded graphite has been used in other applications, such as gaskets, valve stem or pump packings, and high temperature applications, such as thermal radiation shielding, furnace linings, and the like.

The preferred densities, electrical resistivity and resistances, and length, width and thicknesses of the flexible expanded graphite foil layer for use in the zoned de-icing system embodiment of the invention are discussed further below.

The outer heat-conducting layer 22 is preferably a thermoplastic or thermosetting material, including rubber or other elastomeric materials, that is a thermal conductor and an electrical insulator and is durable and abrasion-resistant.

Suitable materials include polyurethane, polyethylene, polyvinyl chloride, polyamides, polystyrenes, and the like. The preferred material is essentially non-electrically conducting, having a volume electrical resistivity of about $10^3$ ohm-in ($2.54 \times 10^3$ ohm-cm) to about $10^{12}$ ohm-in ($2.54 \times 10^{12}$ ohm-cm). The preferred outer heat-conducting layer has a thermal conductivity of about 0.1 watts/meter K (W/MK) to about 5 W/MK and, more preferably, about 0.5 W/MK to about 4 W/MK. In order for the material to be heat-conducting and electrically non-conducting, a heat-conductive inorganic compound or mixture of heat-conductive inorganic compounds is typically added as a filler during the manufacture of the material. Examples of inorganic compounds employed as fillers to confer these properties on a thermoplastic or thermosetting material are nitrides, such as aluminum nitride and boron nitride, alumina, silicon compounds, and the like. The manufacture of such thermoplastic and thermosetting materials containing these fillers is known to those skilled in the art of plastics compounding. Preferably, the heat-conducting outer layer in the heat-conducting tape of the invention comprises a thermoplastic material containing aluminum nitride, boron nitride, alumina, or mixtures of these, such as a Staystik™ thermoplastic adhesive, available from Alpha Metals, Inc., Cranston, RI. The thermoplastic material may be in liquid, film or paste form. More preferably, the heat-conducting outer layer comprises a polyurethane film containing boron nitride or aluminum nitride. Most preferably, the polyurethane contains boron nitride.

The heat-conducting outer layer is preferably laminated under heat and pressure to the flexible expanded graphite layer to ensure the integrity of the heat transfer between the flexible expanded graphite foil sheet layer and the protective heat-conducting outer layer. Moreover, lamination of the outer layer to the foil substantial prevents the flaking off of pieces of the foil to assure a continuous foil layer for optimum electrical and heat conductivity. For example, a thermoplastic adhesive (Staystik™) may be suitably laminated to the flexible expanded graphite layer under heat and pressure conditions of 125°C to 200°C and 0 to 10 psi, (0 to 690 hPa) respectively. The thickness of the heat-conducting outer layer in the heat-conducting tape is about 0.001 inches (0.025 mm) 0.030 inches (0.76 mm), preferably about 0.001 inches (0.025 mm) to about 0.010 inches (0.25 mm) and, more preferably, about 0.005 inches (0.13 mm).

The insulating base layer 24 may be comprised of any of a number of materials that are insulating for electricity, that are flexible enough to facilitate the installation of the heat-conducting tape onto irregularly shaped aircraft surfaces, and can be bonded, such as by an adhesive, to the heat-conducting outer layer and/or to the flexible expanded graphite layer. The electrically insulating material may or may not be also heat insulating. For example, it may be desirable to heat the aircraft surface under the heat-conducting tape. In this case, the selection of the electrically insulating layer includes a material that is not heat insulating. Suitable insulating base layers include, but are not limited to, elastomers, such as chloroprene, isoprene and neoprene, or thermoplastic or thermosetting materials containing inorganic heat-conducting fillers, alone or in combination with insulating fabrics, such as fiberglass cloth. The insulating layer has a thickness of about 0.005 inches (0.13 mm) to 0.250 inches (6.35 mm).

As further illustrated in **Figure 6,** in order to assess, in real time, the amount of heat generated on the aircraft surface 30 created by the heat-conducting tape 2, a temperature sensor, such as one or more thermocouples 32 of known types, may be included in one or more areas of the heat-conducting tape 2. Temperature sensors other than thermocouples may be used in the invention and these are well known to those skilled in the art. In the embodiment of the invention illustrated in **Figure 6,** a bondable foil thermocouple 32 is incorporated into the heat-conducting tape at an outer surface of the outer heat-conducting layer and thermocouple control wires 34 may be routed with the electrical wires to a control system (see below). Temperature sensors can also be bonded within the heat-conducting tape (not shown). The temperature sensor is ideally thin and flat and can sense temperatures up to 150°C. A suitable thermocouple sensor for use in the invention is a self-adhesive Omega iron/constantan thermal couple (Omega Engineering, Inc., Stamford, CT).

In order to selectively control the temperature of a surface to which the heat-conducting tape is applied, the flexible expanded graphite layer is connected to a source of electrical energy 50. For example, as illustrated in **Figures 6** and **7** the flexible expanded graphite layer 20 is connected to the power source 50 using an edge connector or bus bar 40 and wiring system 36. The pliable wiring and bus arrangement connects the flexible expanded graphite layer to a main grid (not shown). Another edge connector or bus bar 38 is riveted to the metal aircraft section to provide a ground for the electrical circuit. Thus, the flexible expanded graphite foil layer is preferably connected to the power source by a single set of two electrical terminals. A current is transmitted through the foil by establishing a voltage differential between the terminals, resulting in heating of the foil.

The power source 50 may be one of several types on the aircraft, as is known to those skilled in the art. Light aircraft may be fitted with a 150 ampere to 200 ampere alternator producing 40 to 60 volts, without a significant weight penalty. Suitable alternators are available from EGC enterprises, inc., Chardon, Ohio. These alternators produce 150 amps at 50 volts and the voltage is selectable. Tests of the heat-conducting tape of the present invention have determined that an alternator having 3 to 35 volts available can provide a flexible expanded graphite foil heater producing 2 to 15 watts/in$^2$ (0.31 to 2.32 watts/cm$^2$).

In the first embodiment of the invention, wherein the flexible expanded graphite foil sheet has a uniform thickness, the temperature of the aircraft surface may be controlled by varying the voltage applied to the flexible expanded graphite layer of the heat-conducting tape over a fixed or varied amount of time or by providing a constant voltage for a series of fixed intervals or time. The amount of wattage supplied to the flexible expanded graphite layer can be varied in response to the outer surface temperature using a programmable power control logic system 60, such as a microprocessor, as illustrated in **Figure 7.**

The invention is now described in detail with regard to a preferred embodiment of the invention employing the heat-conducting tape as a zoned de-icing system for aircraft surfaces including a leading edge. Special requirements for efficient zoned de-icing protection, published by the Federal Aviation Administration (FAA) in Aircraft Icing Handbook, Report #DOT/FAA/CT-88/8-2, III 2-3, include a high specific heat input applied over a short time period; immediate cessation of heating and rapid cooling of the surface after ice shedding occurs to greatly reduce runback ice; a minimum size of the heated area so that the heat is applied only under the ice and not dissipated to the airstream; a proper distribution of heat to produce clean shedding and to avoid runback icing, such that the melting of the ice bond occurs uniformly over the surface; prevention of anchorage of ice by bridging from one zone to another, and a cycle "off time" which is controlled to permit adequate ice accretion for the best shedding characteristics. The "off time" depends upon the thermal capacity of the shedding zone and the rate at which the surface cools to 32°F (0°C), as well as the icing rate, so that the ice thickness accumulated is the best for shedding when de-icing occurs. It is known from icing tunnel testing that thermal ice protection systems must be on before entering icing conditions, due to the "bridging" characteristics of ice formation and the amount of energy required to remove ice which has already formed on a structural member. It will be appreciated from the following description, that each of these special requirements is met or exceeded by the zoned de-icing system of the invention.

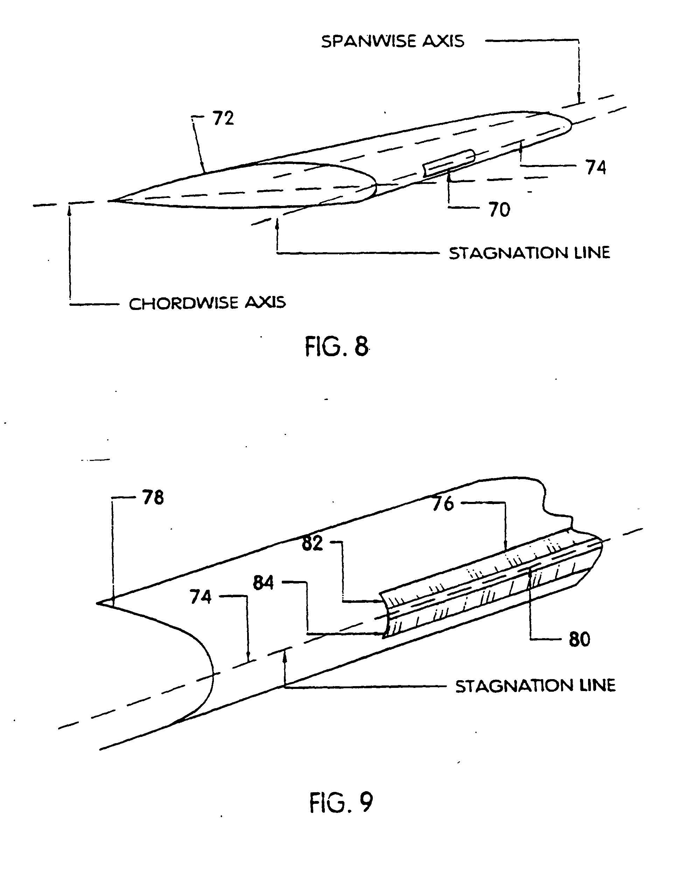

As illustrated in **Figure 8,** an electrothermal de-icer 70 according to prior art is shown mounted on a structural member 72 in the form of a wing. As is known, the structural member 72 includes a chordwise axis and a spanwise axis. During flight, the airflow impinges on a leading edge 74 of the structural member 72 and, when icing conditions are encountered, a number of icing stagnation points can develop, forming an ice stagnation line or axis, the position of which varies with the angle of attack of the leading edge during flight.

In the zoned electrothermal de-icing system embodiment of the present invention, a heat-conducting tape 76 is bonded to the leading edge 74 of an aircraft structure such as a wing 78, as illustrated in **Figure 9.** The heat-conducting tape comprises at least two layers (not shown) laminated to each other under heat and pressure, *i.e.,* the outer heat conducting layer described above, and the non-metallic electrically conductive layer consisting of flexible expanded graphite foil. However, as described below, in this embodiment the flexible expanded graphite foil does not have a uniform thickness. Otherwise, the heat-conducting tape 76 is the same as that illustrated in Figures 4 and 5, and the bonding of the tape to the aircraft structure is the same as that illustrated in Figure 6, including the insulating layer, the thermocouple(s), electrical contacts and connection to a power supply.

The heat-conducting tape may further comprise an additional outer erosion-resistant layer covering the outer heat-conducting layer, such as a layer of titanium, nickel, aluminum, stainless steel, and alloys thereof. Such erosion-resistant layers are known in the art.

In the zoned de-icing system embodiment illustrated in **Figure 9,** the heat-conducting tape 76 comprises a first area that forms a parting strip 80 having a length disposed spanwise along the leading edge 77 of the structure and having a width sufficient to accommodate a change in the position of the ice stagnation line. The heat-conducting tape 76 further comprises a second area disposed spanwise above and aft of the parting strip 80 forming a first ice accumulation and shedding zone 82, and a third area disposed spanwise below and aft of the parting strip 80, forming a second ice accumulation and shedding zone 84. As described in detail below, the thickness of the flexible expanded graphite foil in the parting strip is always greater than the thickness of the graphite foil in each of the ice accumulation and shedding zones. When a predetermined amount of electric current is transmitted continuously through the tape, the outer surface of the heat-conducting outer layer at the parting strip is heated continuously to a temperature above 32°F (0°C) to maintain a continuous ice-free (running wet) condition. At intermittent intervals, an increased electric current is applied to the tape to raise the temperature of the outer surface of the heat-conducting outer layer at the spanwise ice accumulation and shedding zones above 32°F (0°C) to melt or loosen accumulated runback ice, which is then aerodynamically removed from the structural member by the airstream passing over the aircraft or by centrifugal forces when the aircraft structure is a propeller or rotor blade.

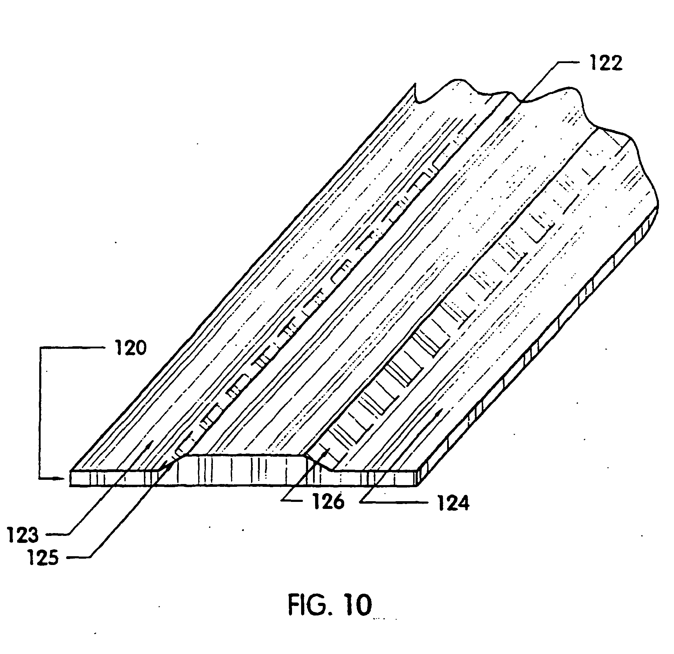

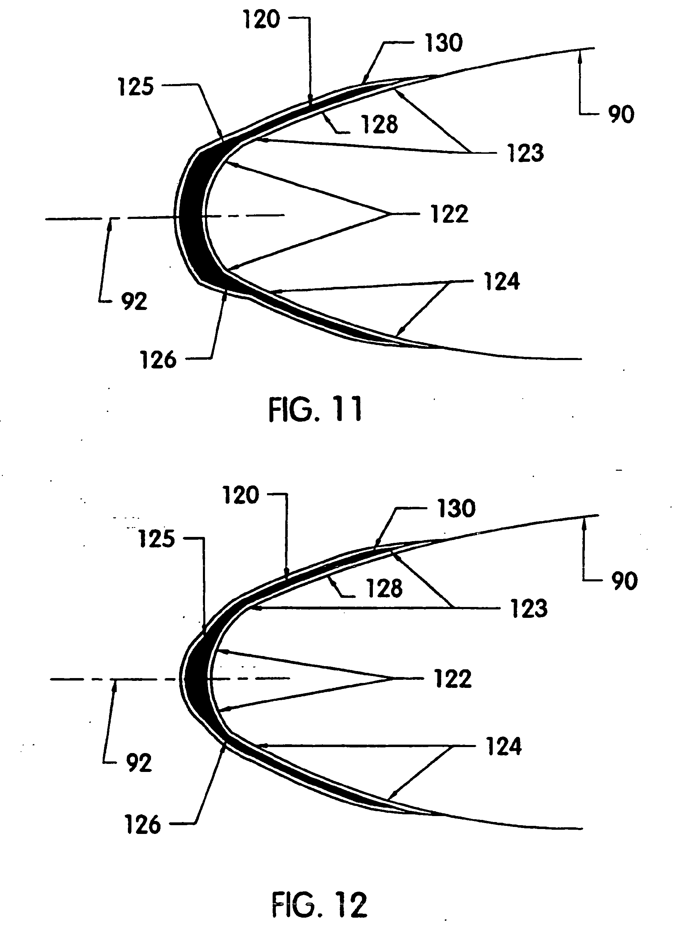

One embodiment of the flexible expanded graphite foil layer of the heat-conducting tape is illustrated in **Figure 10** and in cross-section on the leading edge of a wing 90 in **Figures 11** and **12.** In this embodiment, the flexible expanded graphite foil 120 is a monolithic, continuous structure which is shaped or "sculptured" to form a first thickness in the parting strip 122, a second thickness in the first ice accumulation and shedding zone 123, and a third thickness in the second ice accumulation and shedding zone 124, wherein the thickness of the foil sheet in the parting strip 122 is greater than the thickness of the foil in each of the first or the second ice accumulation and shedding zones. Preferably, the continuous foil sheet comprises a decreasing gradient of thicknesses 125 and 126 between the parting strip 122 and the first ice accumulation and shedding zone 123 and between the parting strip 122 and the second ice accumulation and shedding zone 124, respectively. The decreasing gradient of thicknesses may be shaped to form an angle or a series of "steps", as illustrated in **Figures 10** and **11**, or may be smoothly contoured, as illustrated in **Figure 12.** Calculations of the thicknesses of the foil in the decreasing thickness gradients represented by the angle, steps or smooth contour are discussed below. The flexible expanded graphite foil layer 120 is disposed between the insulating layer 128, which is bonded to the outer surface of the wing 90, and the outer heat-conducting layer 130. In each of Figures 11, 12 and Figures 14 and 16 below, the ice stagnation line 92 is indicated as a broken horizontal line.

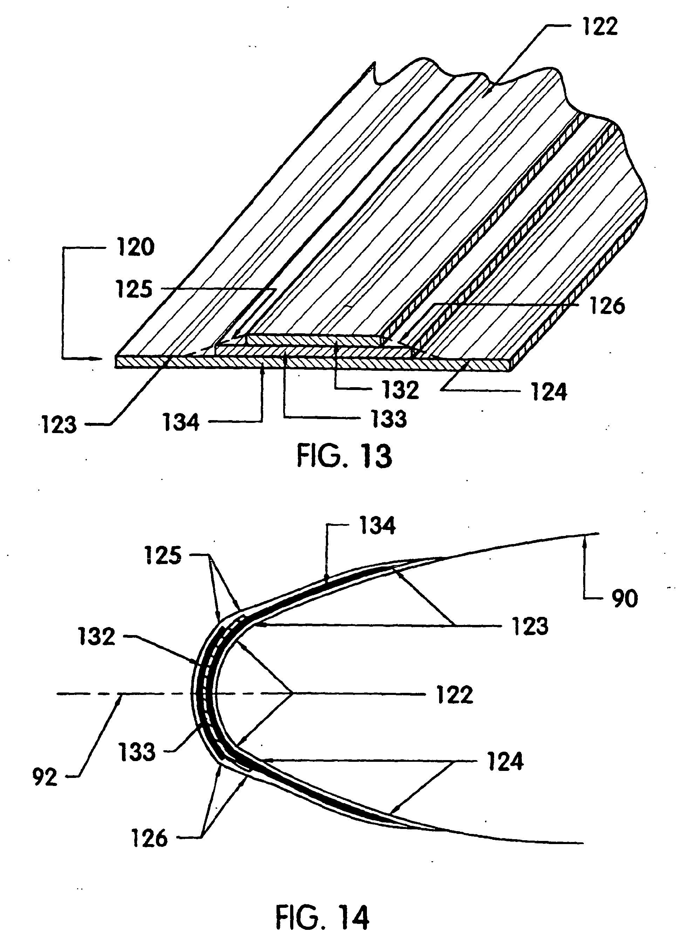

In another embodiment of the flexible expanded graphite foil layer of the zoned de-icing system embodiment illustrated in **Figure 13** and in cross-section on the leading edge of a wing 90 in **Figure 14,** the parting strip 122 comprises at least two layered flexible expanded graphite foil sheets 132 and 133, having thicknesses that are the same as or different from each other. In this embodiment, bottom layer 134 of foil may have a thickness that is the same as or different from the thickness of the foil in the ice accumulation and shedding areas 123 and 124. The layers are shaped to provide a decreasing gradient of thicknesses 125 and 126 between the parting strip 122 and the first ice accumulation and shedding zone 123 and between the parting strip 122 and the second ice accumulation and shedding zone 124, respectively.

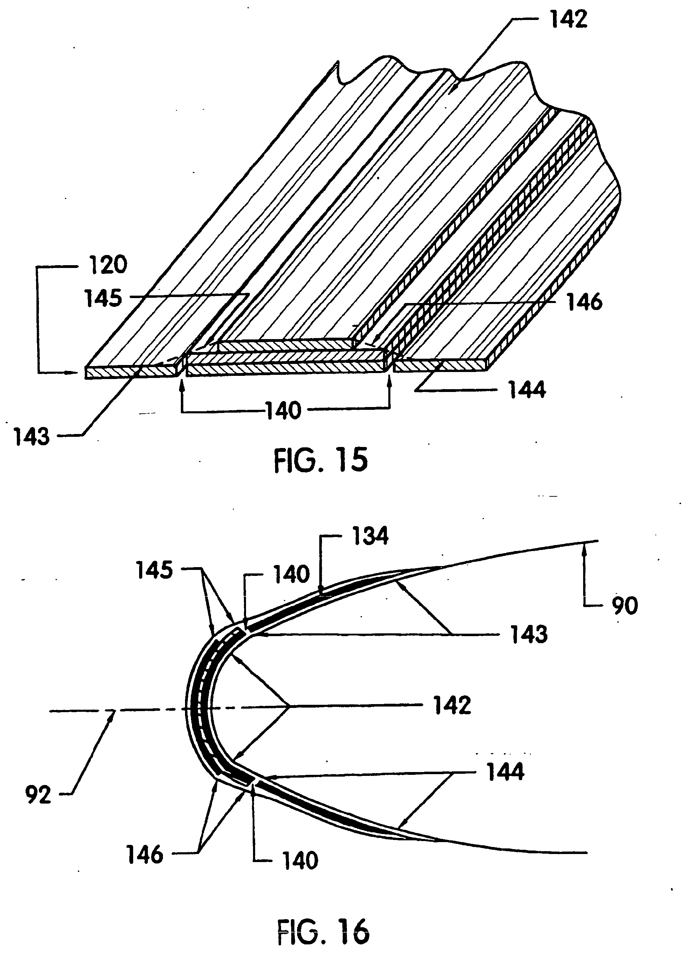

In another embodiment of the flexible expanded graphite foil layer 120 of the zoned de-icing system embodiment illustrated in **Figure 15** and in cross-section on the leading edge of a wing 90 in **Figure 16,** the foil comprises at least two separate sections selected from the group consisting of a parting strip section 142, a first ice accumulation and shedding section 143, and a second ice accumulation and shedding section 144, wherein the first and/or the second ice accumulation and shedding sections are separated from the parting strip section 142 by a gap 140 of no greater than 60 mils (1.524 mm). A gap of this dimension is acceptable because it allows heat transfer between the separated sections, and it allows the three sections of the foil to be connected to a power supply by a single set of two electric terminals. In another embodiment which may be desirable for testing purposes, each of the three sections of the foil may have its own set of two electric terminals for connection to the power supply.

In the illustrated embodiment of **Figures 15** and **16,** both the first and second ice accumulation and shedding sections are separated from the parting strip section; however, in another embodiment, only one ice accumulation and shedding section may be separated from the parting strip section. The parting strip section 142, or at least one of the ice accumulation and shedding zone sections 143 and 144, respectively, may comprise a decreasing gradient of thicknesses 145 or 146 between the parting strip and the first ice accumulation and shedding zone or between the parting strip and the second ice accumulation and shedding zone, respectively.

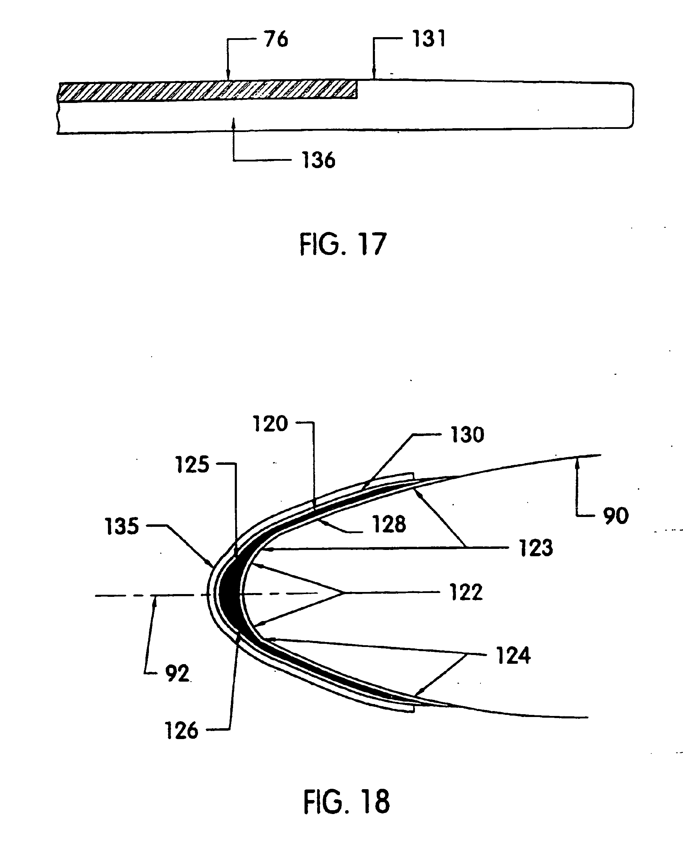

In another embodiment of the zoned de-icing system, the heat-conducting tape 76 is bonded to a leading edge 131 of a helicopter rotor blade or a propeller blade 136, as illustrated in **Figure 17.** Because of the speed of rotation of the blades during flight, and the centrifugal forces produced, these blades are more susceptible to erosion by the force of the impinging water droplets. Therefore, it is preferred that, in this embodiment illustrated in **Figure 18,** an additional outer erosion-resistant layer 135 is bonded to the outer heat conducting layer, such as by an adhesive. Preferably, the outer erosion-resistant layer is selected from titanium, nickel, aluminum, stainless steel, and alloys thereof. It is to be appreciated that this additional outer erosion-resistant layer may be present when any of the embodiments of the heat-conducting tape illustrated in **Figures 10** through **16** is employed on a helicopter rotor blade or a propeller blade.

Any of the embodiments of the tape described above may be produced by calendering, such as that described in U.S. Patent No. 5,198,063, or by vertical pressing, as known to one of ordinary skill in the art.

To determine the desired thicknesses of the flexible expanded graphite foil in the parting zone and in the ice accumulation and shedding zones, the electrical resistance of the foil must be considered. It is known that the electrical resistivity and resistance of flexible expanded graphite along the length and width of the foil varies with both the thickness and the density of the foil. Therefore, the thickness of flexible expanded graphite foil layer having a known resistivity, density, length (L) and width (W) may be calculated, as follows, where A is the cross-sectional area (W x thickness, T) of the foil:

$$\frac{L}{A} \; x \; \text{resistivity} \; = \; \text{resistance (R)} \qquad (1)$$

$$\text{Power (watts)} \; = \; I^2 \,\text{(amps) R} \qquad (2)$$

$$\text{Power} \; = \; I\,E\,\text{(voltage)} \qquad (3)$$

$$I = \frac{E}{R} \quad \text{and } R = \frac{E}{I} \qquad (4)$$

The value of R may then be used in equation (1) to determine the thickness of the foil by calculating the cross-sectional area A.

For example, a flexible expanded graphite foil has a density of 90 lbs./ft.$^3$ (1.38 g/cm$^3$), a resistivity of 3.1 x $10^{-4}$ ohm-in (7.87 x $10^{-4}$ ohm-cm), a length of 60 inches (152.4 cm) and a parting strip width of one inch (2.54 cm). From exemplary testing data, such as that described below, it may be determined that Grafoil® having an area of 60 in.$^2$ (387 cm$^2$) requires 5 watts/in.$^2$ (0.775 watts/cm$^2$), to maintain a temperature in the parting strip above 32°F (0°C), *e.g.*, about 34°F (1.1°C) to about 37°F (2.8°C). The total wattage necessary is 300 watts. Employing power from a high output alternator, such as that described above, an exemplary 25 volt output is selected. From the above equations,

$$300 = I\,E \quad \text{where} \quad E = 25 \text{ volts}$$

$$I = 12 \text{ amps}$$

$$300 = 12^2\,R$$

$$R = 2.08 \text{ ohms}$$

$$\frac{60}{A} \times 3.1 \times 10^{-4} = 2.08$$

$$A = \frac{60 \times 3.1 \times 10^{-4}}{2.08} = 0.009 \text{ in}^2 \quad (0.058 \text{ cm}^2)$$

$$A = W \times T$$

$$T = \frac{A}{W} = 0.009 \text{ inches} \quad (0.0229 \text{ cm})$$

The above calculations can also be used to determine the thickness of the flexible expanded graphite foil layer in the ice accumulation and shedding zones. The calculations assume a uniform thickness of the foil, excluding decreasing thickness gradients. In the embodiment of the invention illustrated in Figure 12, wherein the flexible expanded graphite layer is contoured, similar calculations can be used to determine optimum thickness gradient using calculus, as known to one of ordinary skill in the art.

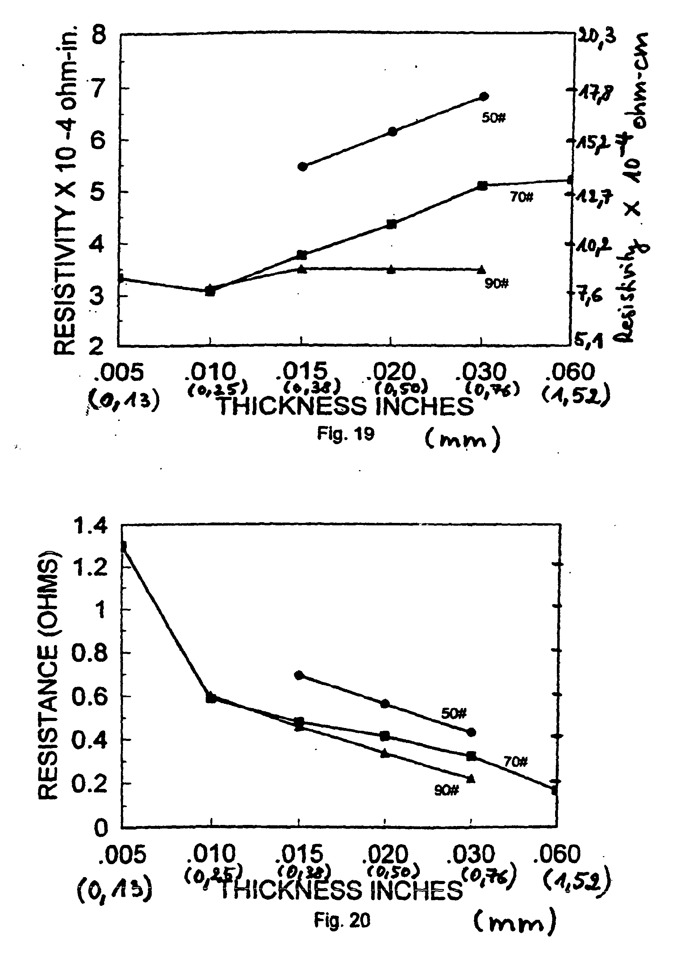

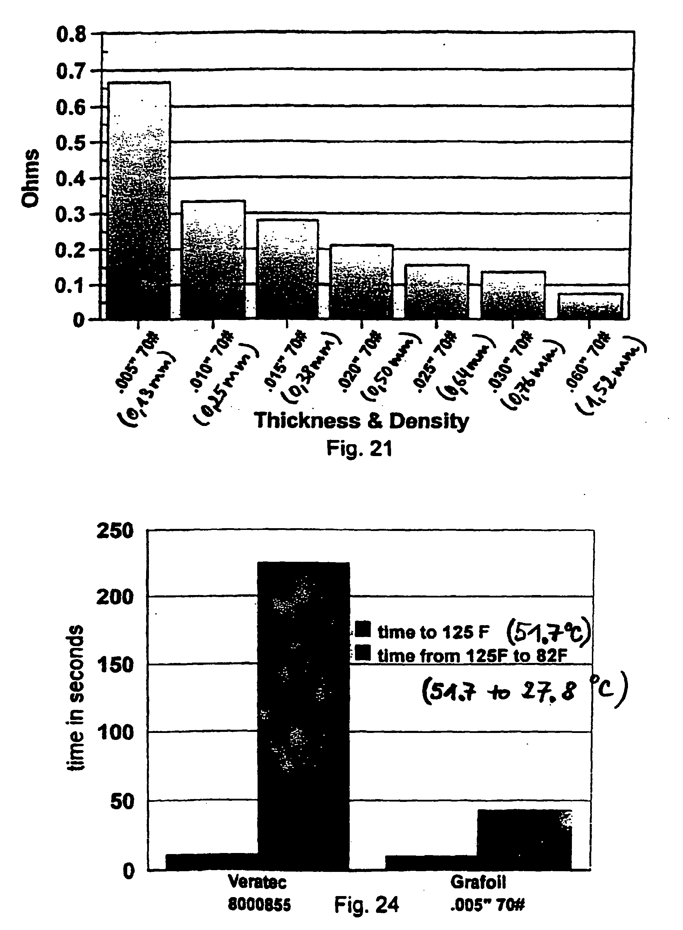

As illustrated in **Figures 19** and **20, 1"** wide x 19" long (2.54 cm wide x 48.26 cm long) test strips of Grafoil® Brand Flexible Expanded Graphite of 50 (0.77) (50#), 70 (1.08) (70#) and 90 (1.38 g/cm$^3$) (90#) lbs/ft$^3$. density and

varying thicknesses were subjected to a selected power from a DC power supply providing 2 to 6 volts and 4 to 17 amperes. The values for the electrical resistivity and resistance of the Grafoil® were calculated by known methods, using the equations described above and voltmeter and ammeter measurements. As illustrated in **Figure 19,** the resistivity of the foil having a density of 90 lbs./ft.$^3$ (1.38 g/cm$^3$) was substantially constant at between about 3.1 and about 3.4 x 10$^{-4}$ ohm-in (about 7.87 and about 8.63 x 10$^{-4}$ ohm-cm) over a range of thicknesses of at least 0.005 inches (0.13mm) to 0.030 inches (0.76 mm). The resistivity of the 70 lbs./ft.$^3$ foil (1.08 g/cm$^3$) was also in the range of about 3.1 to about 3.7 x 10$^{-4}$ ohm-in. (about 7.87 to about 9.4 x 10$^{-4}$ ohm-cm) at thicknesses of about 0.005 (0.13) to about 0.015 inches (0.38 mm). As is apparent from the foregoing calculations for obtaining thickness values for each of the parting strip and ice accumulation and shedding zones, it is preferred that the resistivity of the flexible expanded graphite comprises a substantially constant value, such as about 3.1 x 10$^{-4}$ ohm-in (7.87 x 10$^{-4}$ ohm-cm). As illustrated in **Figure 20,** the resistance of the flexible expanded graphite foil along its length and width decreases with the thickness and the density of the foil. Foil having a density of 70 or 90 lbs/ft.$^3$ (1.07 or 1.38 g/cm$^3$) showed a lower resistance over all thicknesses than the 50 lbs./ft.$^3$ (0.77 g/cm$^3$) foil, with the 90 lbs./ft.$^3$ (1.38 g/cm$^3$) foil showing the greatest decrease in resistance with increasing thickness. The resistance of various thicknesses of Grafoil® having a density of 70 lbs./ft$^3$. (1.07 g/cm$^3$) and a resistivity of 3.1 x 10$^{-4}$ ohm-in. (7.87 x 10$^{-4}$ ohm-cm) at various thickness is illustrated in **Figure 21.** In view of the foregoing measurements of resistivity and resistance, the density of the flexible expanded graphite foil used for the zoned de-icing system embodiment of the invention may be about 50 to about 95 lbs./ft.$^3$ (about 0.77 to about 1.46 g/cm$^3$), but is preferably about 70 to about 95 lbs./ft.$^3$ (about 1.07 to about 1.46 g/cm$^3$), more preferably about 80 to about 95 lbs./ft.$^3$ (about 1.23 to about 1.46 g/cm$^3$), especially about 90 to about 95 lbs./ft.$^3$ (about 1.39 to about 1.46 g/cm$^3$).

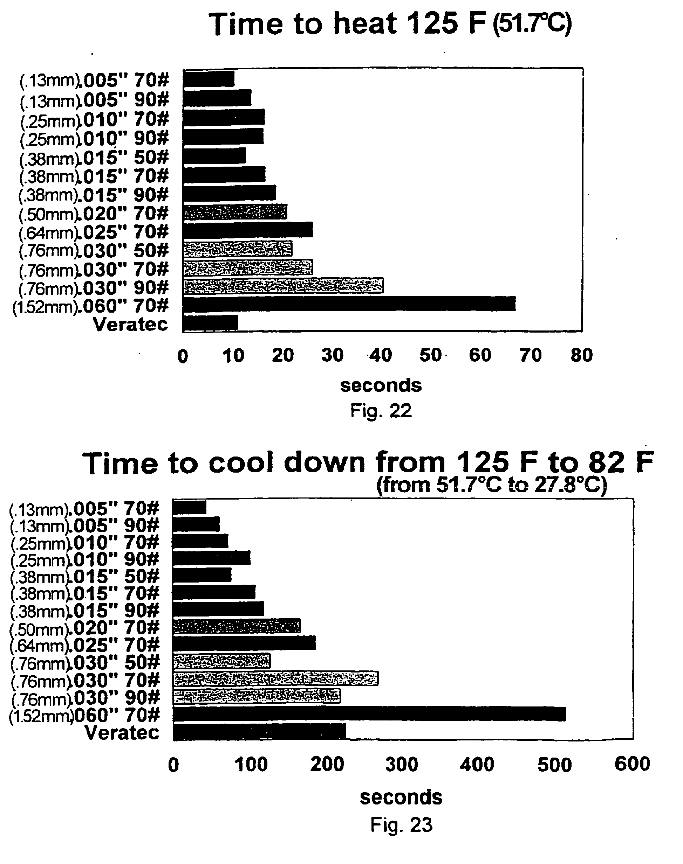

The heat-up and cool-down times of the flexible expanded graphite foil used in the heat-conducting tape of the invention were compared to heat-up and cool-down times of the conductive ply of an electrothermal heating pad employing metal elements for aircraft de-icing disclosed in U.S. Patent 5,344,696. The disclosed conductive ply comprises a mat of nickel-coated carbon fibers, VERATEC Grade Number 80000855, available from VERATEC, a division of International Paper Co., Walpole, Mass. Strips of the VERATEC mat (0.003 inches (0.076 mm) thick) or Grafoil® Brand Flexible Expanded Graphite of varying densities and thicknesses, measuring 2" wide x 20" long (5.08 cm wide x 50.8 cm long) were subjected to 20 watts (0.5 watts/in.$^2$ (0.08 watts/cm$^2$)) of power. The time to heat to 125°F (51.7°C) from ambient temperature (82°F (27.8°C)) in air, with no convection was measured. When power was removed, the time to cool down from 125°F (51.7°C) to 82°F (27.8°C) was measured. As demonstrated by the data in **Figures 22, 23** and **24,** Grafoil® having a thickness of 0.005 inches (0,13 mm) and a density of 70 lbs./ft.$^3$ (1.08 g/cm$^3$) heats as quickly to 125°F (51.7°C) as 0.003 inch (0.076 mm) thick VERATEC, but cools down about five times faster. Moreover, Grafoil® having a thickness of 0.005 inches (0.13 mm) and a density of 90 lbs./ft.$^3$ (1.39 g/cm$^3$) heats almost as quickly as the VERATEC, but cools down about twice as quickly.

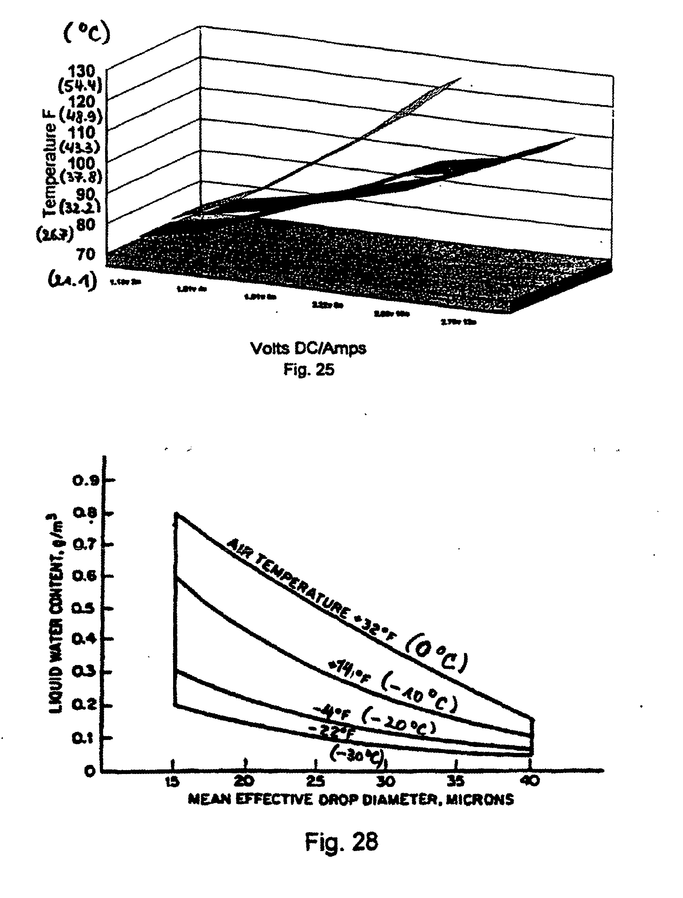

Preliminary bench tests were performed to determine the power requirements for heating Grafoil® having a density of 70 lbs./ft.$^3$ (1.07 g/cm$^3$) or 90 lbs.ft.$^3$ (1,39 g/cm$^3$) bonded to a composite laminar flow wing from a Vantage® aircraft (supplied by VisionAire Corporation, Ames, Iowa). The tape was divided into three 2" wide x 20" long (5.08 cm wide x 50.8 cm long) sections having different thicknesses simulating a parting strip area having a thickness of 0.020 inches (0,5 mm), and each of two ice accumulation and shedding areas having a thickness of 0.005 inches (0.13 mm). The tape was subjected to DC voltage at various amperages, and the temperature of the outer heat conducting layer of the tape was measured with a thermocouple. The test was conducted at ambient temperature (75° F (23.9°C)) in air with no convection. The results of this test, illustrated in **Figure 25,** show that for each of the given voltages and amperages, the thicker "parting strip" (checkered ribbon) was hotter than either of the two thinner ice accumulation and shedding areas (hatched ribbons). Moreover, at a power setting of less than 2.55 volts and 10 amps, the "parting strip" was about 20°F (11 K) hotter than the flanking areas.. As the power setting increased to 2.78 volts and 12 amps, the difference in temperature widened to about 32°F (17.8 K).

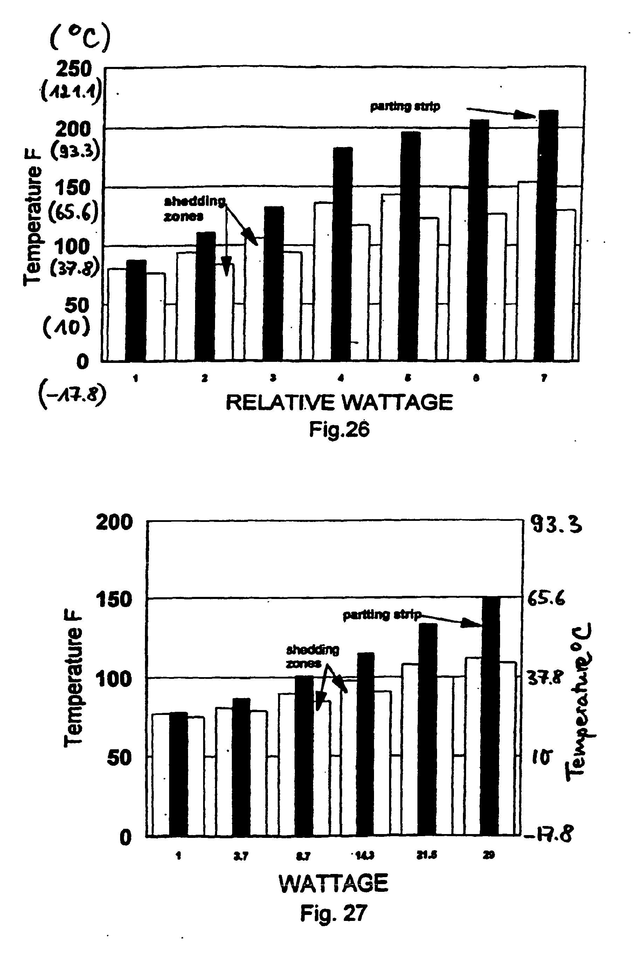

A further bench test was conducted to determine the heat conducted from the parting strip zones to the ice accumulation and shedding zones. In this test, Grafoil® having a density of 90 lbs./ft.$^3$ (1.39 g/cm$^3$) was divided into three 2" x 20" (5.08 cm x 50.8 cm) sections that were separately connected to electrical terminals. The sections were apposed to each other on the Vantage composite wing with a gap of no greater than 60 mils (1.5 mm), with a parting strip section having a thickness of 0.020 inches (0.5 mm) along the leading edge, flanked by an ice accumulation and shedding zone section having a thickness of 0.005 inches (0.13 mm) on each side. Each section of the tape was separately connected to electrical terminals. The test was conducted at ambient temperature in air with zero convection. The data in **Figure 26** illustrate the heat transfer test with only the parting strip powered; whereas the data in **Figure 27** illustrate the heat transfer test with both the parting strip and the ice accumulation and shedding zones powered. At each wattage tested, there was significant heat transfer from the parting strip to each of the ice accumulation and shedding zone, when the parting strip only was powered. Moreover, when all zones are energized, minimal energy was required for achieving desired temperatures, such as during a short de-icing cycle.

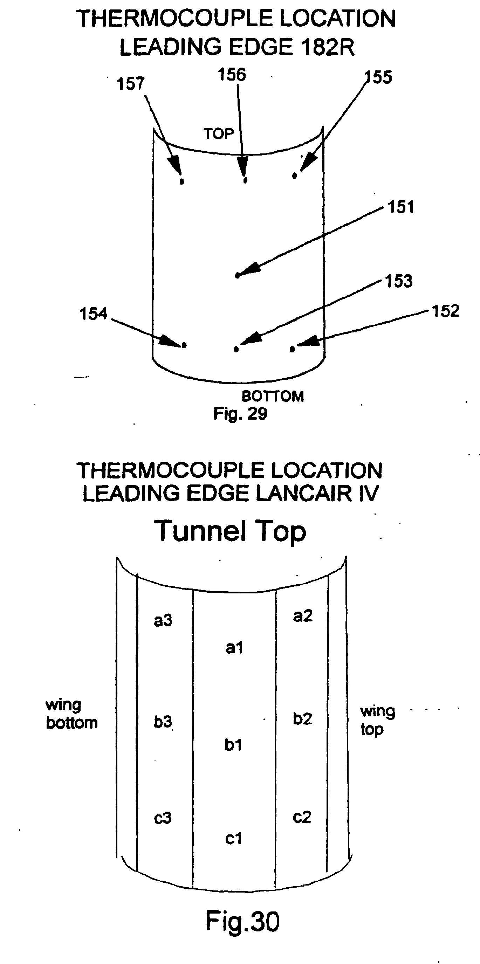

Preliminary tests to determine the power requirements for heating the heat-conducting tape having various thicknesses of flexible expanded graphite foil, above 32 °F (0°C) under various environmental conditions, were performed at the Icing Research Tunnel (IRT) at NASA Glenn Research Center, Cleveland, Ohio. Atmospheric icing conditions were simulated to fall within the FAA guidelines for aircraft de-ice testing (Aircraft Icing Handbook, Report #DOT/FAA/CT-88/8-2, Appendix C, Figure 3-2, FAR 25 Atmospheric Icing Design Conditions - Stratiform Clouds). The conditions are for continuous (stratiform clouds) atmospheric icing conditions, with a pressure altitude range of sea level to 22,000 feet (6.7 km), a maximum vertical extent of 6500 feet (1980 m), and a horizontal extent at a standard distance of 17.4 nautical miles (32.22 km). The published Figure 3-2 is reproduced as Figure 28. Environmental conditions in the IRT were selected to fall within approximately the middle of the illustrated envelope.

The heat-conducting tape comprised Grafoil® laminated to a layer of mineral filled polyurethane material (Staystik™) having a thickness of 0.003 inches (0.08 mm). The tape was bonded with a rubber backing to one of two aircraft wing models, *i.e.,* a Cessna 182-R wing or a Lancair IV carbon composite wing. For the Cessna wing, the tape was a single sheet, and the density of the Grafoil® was 70 lbs./ft.$^3$ (1.07 g/cm$^3$). For the Lancair wing, the tape was divided into three sections, as described below, and the density of the Grafoil® was 90 lbs./ft.$^3$ (1.39 g/cm$^3$).

The location of the seven thermocouples on the leading edge of the Cessna 182-R wing and the six thermocouples (at arrow heads) on the Lancair IV wing are indicated in Figures 29 and 30, respectively. On the Cessna 182-R leading edge, temperature probes #3 and #6 (153 and 156, respectively) are located along the icing stagnation line; temperature probe #1 (151) is located inside the leading edge behind the aluminum; temperature probes #2 (152) and #3 (153) are located 2-3/8 inches (6 cm) to the right of and 1-3/8 inches (3.5 cm) to the left of the icing stagnation line, respectively, and 7 inches from the bottom of the wing section; and temperature probes #5 (155) and #7 (157) are located 2-3/8 inches (6 cm) to the right of and 1-1/4 inches (3.2 cm) to the left of the icing stagnation line, respectively, and 7 inches (17.8 cm) from the top of the wing section. On the Lancair IV wing, sets of three thermocouples a1, b1, c1; a2, b2, c2; and a3, b3, c3 are located in parting strip zone 1, ice accumulation and shedding zone 2 and ice accumulation and shedding zone 3, respectively.

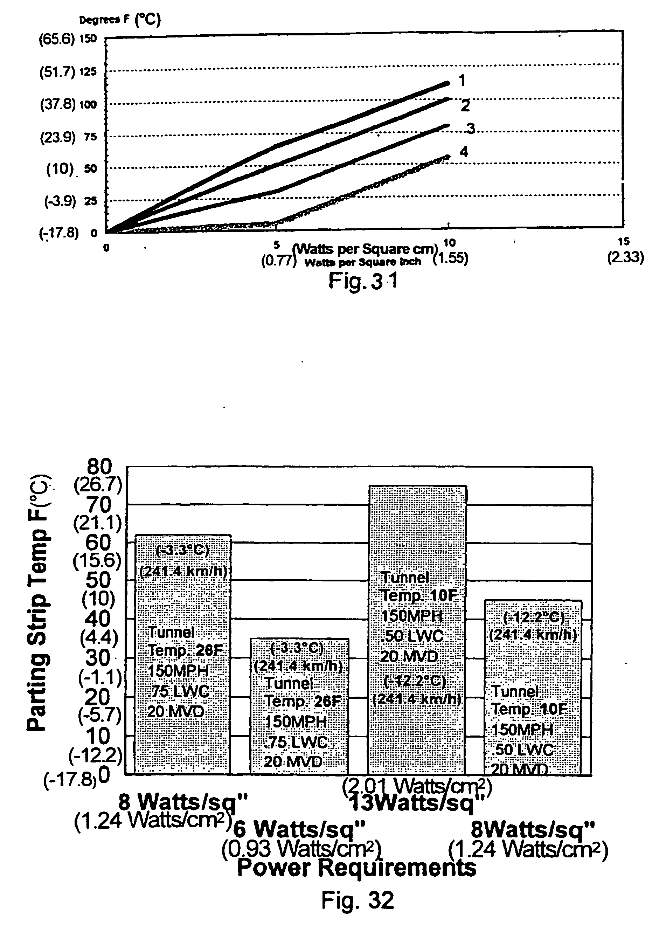

The results of initial testing of the heat-conducting tape to determine the watt densities provided at the location of the thermocouple #3 on the Cessna 182-R wing under various environmental conditions are presented in Figure 31. The dimensions of the tape were 6" wide x 20" long (15.24 cm wide x 50.8 cm long). The Grafoil® had a thickness of 0.005 inches (0.13 mm). Water droplets were sprayed on the wing at 0°F (-17.8°C) or 20°F (-6.6°C), at a simulated aircraft speed of 150 miles per hour (mph) (241 km/h), to produce a liquid water content (LWC) of 0.75 g/m$^3$ or 1.5 g/m$^3$, respectively, and a mean volumetric water drop diameter (MVD) of 40 microns. The conditions of 20°F (-6.7°C), no spray are represented by graph line 1; 0°F (-17.8°C) are represented by graph line 2; 20°F (-6.7°C), 0.75 LWC, 40 MVD are represented by graph line 3; and 0°F (-17.8°C), 1.5 LWC, 40 MVD are represented by graph line 4.

In another test, using the same tape and the Cessna wing, further tests were conducted to determine the power requirements to raise the temperature of the outer surface of the heat-conducting layer of the tape to various levels under a set of environmental conditions selected to fall well within the envelope of FAA regulations in FAR 25, Appendix C of Figure 26. The results are illustrated in Figure 32. For example, under icing tunnel conditions of 26°F (-3,3°C), a simulated aircraft speed of 150 mph (241 km/h), an LWC of 0.75 g/m$^3$, and an MWD of 20 microns, 8 watts/in$^2$ (1.24 watts/cm$^2$) were required to raise the temperature of the outer surface of the tape to about 62°F (16.7°C); whereas 6 watts/in$^2$ (0.93 watts/cm$^2$) produced a temperature of about 35°F (1.7°C). Similarly, under icing tunnel conditions of 10°F (-12.2°C), a simulated aircraft velocity of 150 miles per hour (mph) (241 km/h), a liquid water content (LWC) of 0.50 g/m$^3$, and a mean volumetric water drop diameter (MVD) of 20 microns, 13 watts/in$^2$ (2.01 watts/cm$^2$) were required to raise the temperature of the outer surface of the heat-conducting layer to about 75°F (23.9°C); whereas 8 watts/in$^2$ (1.24 watts/cm$^2$) produced a temperature of about 45°F (7.2°C).

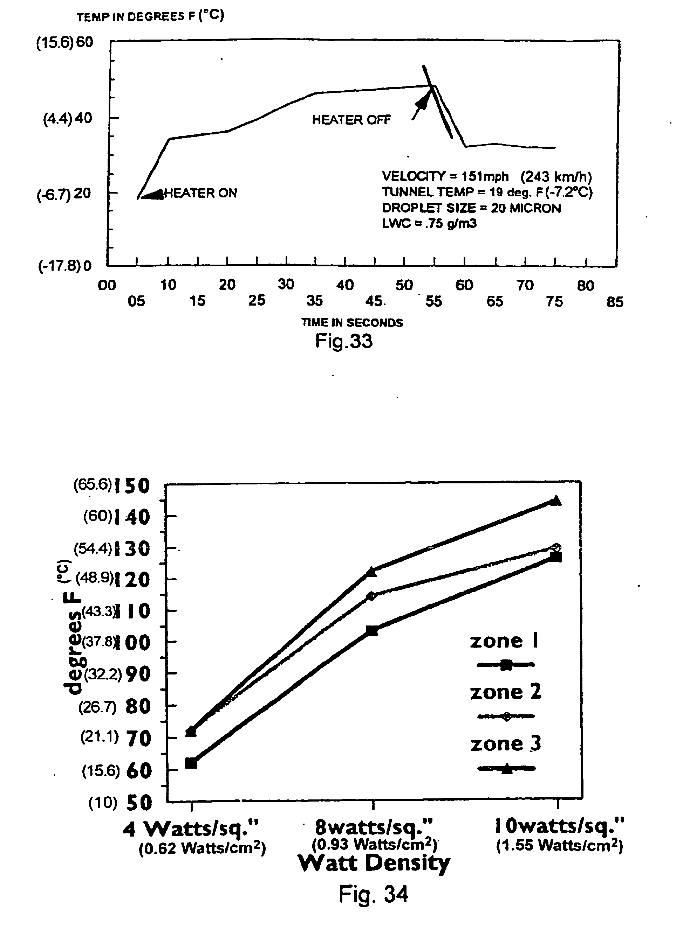

A further test was conducted on the Cessna wing and tape of the previous example to determine the time to heat up (at 7 watts/in$^2$ (1.1 watts/cm$^2$)) and cool down when power was turned off, under tunnel conditions of 19°F (-7.2°C), aircraft velocity of 151 mph, LWC of 0.75 g/m$^3$ and MVD of 20 microns. As illustrated in Figure 33, the time to heat to about 50°F (10°C) was about 50 seconds, and cool-down to 32°F (0°C) occurred in 5 seconds when power was turned off.

Another test was conducted to determine the watt densities required to raise the temperatures of the first and second ice accumulation and shedding zones, labeled zones 2 and 3, respectively, in Figure 30. Zone 1 is the parting strip. The heat-conducting tape was bonded with a rubber backing to the Lancair IV carbon composite wing. The tape was divided into the three zoned sections, each 2" x 20" (5.08 cm x 50.8 cm), separated from each other by a gap not exceeding 60 mils (1.524 mm). The thickness of the Grafoil® in zone 1 was 0.020 inches (0.5 mm); and the thickness of the Grafoil® in each of zones 2 and 3 was 0.005 inches (0.13 mm). Electrical power was applied to each zone separately so that tests using different watt densities in different zones could be accomplished. Three separate environmental conditions were selected, representing conditions within the specified FAR 25, Appendix C, envelope of Figure 28. All tests were conducted at 20 MVD and a simulated aircraft velocity of 150 mph (241 km/h). Test 1 was conducted at 26°F (-3.3°C) and 0.75 LWC; test 2 at 10°F (-12.2°C) and 0.50 LWC; and test 2 at 10°F (-12.2°C) and 0.44 LWC. The results, shown in **Figure 34**, illustrate that watt densities of 4, 8 or 10 watts/in.$^2$ (0.6, 1.2 or 1.6 watts/cm$^2$) were sufficient to raise the temperature of all zones well above 32°F (0°C).

From the accumulated test data described above, it was determined that the flexible expanded graphite foil layer in the heat-conducting tape used in a zone de-icing system embodiment has a thickness in the carting strip excluding the decreasing thickness gradients, of about 0.005 (0.13 mm) to about 0.060 inches (1.52 mm). Similarly, it was determined that the thicknesses of the flexible expanded graphite foil layer in the first and second ice accumulation and shedding zones, excluding the thickness gradients, are the same as or different from each other and range from about 0.001 (0.025 mm) to about 0.050 inches (1,27 mm), typically about 0.001 (0.025 mm) about 0.030 inches (0.76 mm). In the embodiment of the invention, wherein the foil sheets are layered to form a decreasing gradient of thicknesses between the parting strip and the first ice accumulation and shedding zone and between the parting strip and the second ice accumulation and shedding zones, the parting strip comprises at least two layered flexible expanded graphite foil sheets that may have thicknesses that are the same as or different from each other and range from about 0.0025 (0.063 mm) to about 0.047 inches (1.2 mm). As described above, the maximum thickness of the flexible expanded graphite foil in the parting strip is always greater than the maximum thickness of the foil in both of the ice accumulation and shedding zones.

The width of the heat-conducting tape will be sufficient to accommodate a change in location of an icing stagnation line along the leading edge, will vary with the airfoil leading edge size, configuration, impingement area and expected angle of attack during icing conditions, and will be different for each aircraft. For example, the heat-conducting tape on a horizontal tail stabilizer on a Beechcraft Baron B55 may be 60 inches (152.4 cm) in length and 4 inches (10.2 cm) in width, including a parting strip having a one inch (2,54 cm) width. The width of the ice accumulation and shedding areas may be the same or different from each other. Other aircraft, such as those with a very thin leading edge and impingement area (*e.g.,* Lancair IV horizontal tail stabilizers), may require a parting strip 0.25 inches (6.35 mm) in width and a total width of the heat-conducting tape of about 2 inches (5 cm). Moreover, aircraft having a very large leading edge and impingement area (*e.g.,* Cessna 421 wings), may require a parting strip of about 3 inches (7.6 cm) in width and a total width of the heat-conducting, tape of about 8 inches (20 cm). Thus, the parting strip width may vary from about 0.25 (6.35 mm) to about 3 inches (7.6 cm), typically about 0.5 (1.27 cm) to about 2.5 inches (6.35 cm), and more typically about 0.75 (1.8 cm) to about 1.5 inches (3.8 cm). Similarly, the widths of the first and second ice accumulation and shedding zones may range from about one (2.54 cm) to about 6 inches (15 cm), typically about 1.5 (3.8 cm) to about 5 inches (12.7 cm), more typically about one (2,54 cm) to about 3 inches (7,6 cm). Using the calculations and information provided herein, one skilled in the art will be able to determine the length, width and thicknesses of the heat-conducting tape and the flexible expanded graphite layer for any airfoil leading edge, without undue experimentation.

Regardless of the configuration of the flexible expanded graphite layer of the heat-conducting tape, a further feature of the zoned de-icing embodiment of the invention is that the flexible expanded graphite foil layer is preferably connected to the power source by a single set of two electrical terminals. A current is transmitted through the foil by establishing a voltage differential between its corresponding pair of terminals, resulting in heating of the foil. A given amount of power supplied to the flexible expanded graphite layer results in watt densities that differ between the parting strip and the ice accumulation and shedding zones, as governed by the predetermined thicknesses in these areas, and the temperature of the parting strip always exceeds that of the ice accumulation and shedding zones. Therefore, only a single control mechanism for a single set of electric terminals is necessary to produce desired watt densities and temperatures in the parting strip and ice accumulation and shedding zones, resulting in zoned de-icing system that is greatly simplified compared to previously known systems. Moreover, the use of only two terminals results in substantially fewer termination points or contact strips as potential cold spots that could detrimentally become anchor points for ice accumulation.

While, or preferably prior to, encountering icing conditions, sufficient power is supplied from a power source to the flexible expanded graphite foil layer of the heat-conducting tape to maintain the temperature of the outer heat-conducting layer at the parting strip area above 32°F (0°C) to prevent the formation of ice on the parting strip. Preferably the temperature is maintained at about 35°F (1.7°C) to about 45° F (7.2°C). When the heat-conducting tape is to be used as an anti-icing system, the temperature of the outer heat-conducting layer is sufficient to produce evaporation of substantially all water droplets impinging on the tape. In the zoned de-icing system embodiment, the temperature is sufficient to prevent freezing of substantially all water droplets impinging on the outer heat-conducting layer of the parting strip, and the water droplets are allowed to flow aft from the parting strip to the first and/or the second ice accumulation and shedding zones of the heat-conducting tape. In this embodiment, the power supplied to the flexible expanded graphite layer is sufficient to maintain a temperature of the outer heat-conducting layer at the first and second ice accumulation and shedding zones that does not exceed 32°F (0°C), for a first time period sufficient to allow the water droplets to form ice and an ice-to-surface bond on the outer heat-conducting layer of the heat-conducting tape at the first and/or the second ice accumulation and shedding zones. The length of the first time period will depend on the rate of icing which, in turn, depends on the environmental conditions, including the temperature, liquid water content, mean volumetric droplet diameter, the velocity of the aircraft, and the like. The first time period may be about 10 seconds to about 5 minutes, typically about 30 seconds to about 2 minutes and, more typically, about 45 seconds to about 1.5 minutes.

At the end of the first time period, when a desired amount of ice has accumulated on the ice accumulation and shedding zones of the heat-conducting tape, the power supplied to the flexible expanded graphite foil layer is increased, and is sufficient to maintain the temperature of the outer heat-conducting layer at the first and second ice accumulation and shedding zones at greater than 32°F (0°C) for a second time period sufficient to melt the ice-to-surface bond and to allow the formed ice to be shed into an impinging airstream. During the second time period, the temperature is typically maintained in a range of about 37°F (2.8°C) to about 40°F (4.4°C), but may be as low as 34°F (1.1°C). The second time period is typically about 5 seconds to about 60 seconds.

It is a further feature of this embodiment of the invention, that when the temperature is raised to above 32°F (0°C) in the ice accumulation and shedding areas, the watt density in the parting strip is also raised, *e.g.,* to 22.4 watts/in.$^2$ (3.5 watts/cm$^2$) from 5 watts/in.$^2$ (0.8 watts/cm$^2$), with a concomitant rapid rise in temperature (*e.g.,* to about 80°F (44 k) to about 90°F (50 k) in the parting strip. Because of the high thermal conductivity of the flexible expanded graphite foil, heat transfer from the parting strip to the ice accumulation and shedding zones occurs, resulting in a decreased requirement for power to raise the temperature in these zones, than would ordinarily be expected. The heat transfer from the parting strip to the ice accumulation and shedding zones is also enhanced because of the gradient of current flowing through the thickness gradients between the parting strip and these zones.

The following example illustrates the de-icing capabilities of the zoned de-icing system embodiment of the heat-conducting tape of the invention. The example is not to be considered limiting, however, as other heat conducting outer layers, adhesives, insulating layers, thicknesses of these layers, and densities and dimensions of the flexible expanded graphite foil layer, and the like, may be used in the practice of the invention.

The de-icing test was conducted at the Icing Research Tunnel of NASA Glenn Research in Cleveland, Ohio.

## Example 1

The heat-conducting tape comprised Grafoil® having a density of 90 lbs/ft.$^3$ (1.39 g/cm$^3$), laminated to a layer of mineral filled polyurethane material (Staystik™) having a thickness of 0.003 inches (0.08 mm). The tape was bonded with a rubber backing by a rubber-based contact adhesive (1300-L, 3M Company) forming an adhesive layer of about 0.010 inches (0.25 mm) thick to the Lancair IV carbon composite wing. The tape was divided into the three zoned sections, each 2" x 20" (5,08 cm x 50,8 cm), separated from each other by a gap not exceeding 60 mils (1.5 mm). Zone 1 was the parting strip, having a Grafoil® thickness of 0.020 inches (0.5 mm). Zones 2 and 3 were the lower and upper ice accumulation and shedding zones, respectively, having a Grafoil® thickness of 0.005 inches (0.13 mm). Electrical power was applied to each zone separately so that tests using different watt densities in different zones could be accomplished. Three separate environmental conditions were selected, representing conditions within the specified FAR 25, Appendix C, envelope of Figure 28.

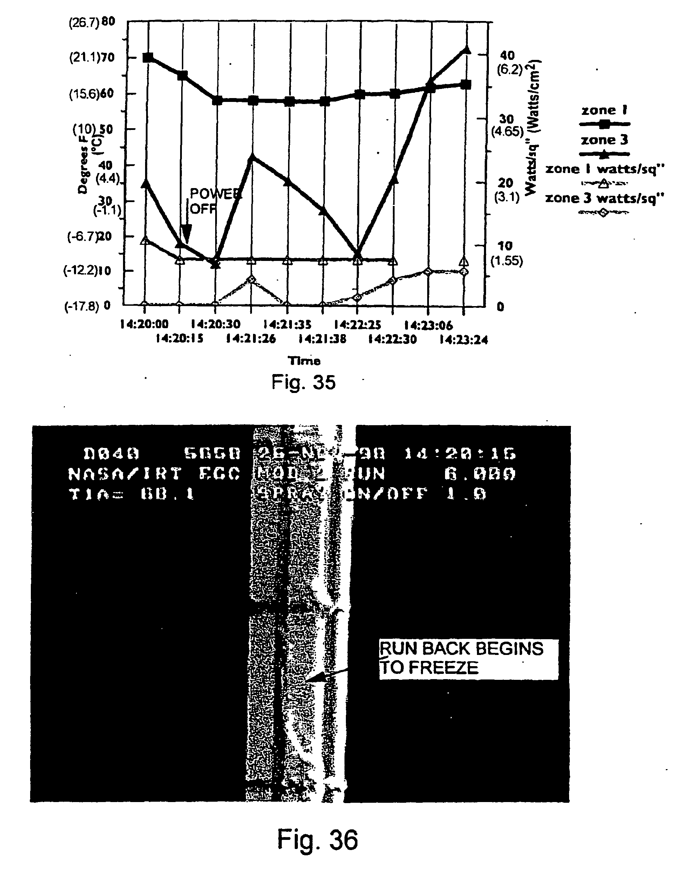

A single de-ice sequence was run on the zoned de-icing system. The electrical current provided was 8 watts. The environmental conditions were 10°F, a simulated aircraft velocity of 150 mph (241 km/h), an LWC of 0.50 and an MVD of 20.61. The power on-off sequence is illustrated in **Figures 35, 37** and **39,** with the graphs indicating the temperature of the outer heat-conducting layer of the tape and watts/in.$^2$ at the parting strip (zone 1) and at ice accumulation and shedding zone (zone 3). The corresponding actual runback icing accumulation and ice shedding on the outer surface of the heat-conducting tape bonded to the wing segment are illustrated in **Figures 36, 38** and **40.** The parting strip zone 1 is to the right of the picture and the impinging airstream is moving from right to left. Zone 3 is in the center of the picture.

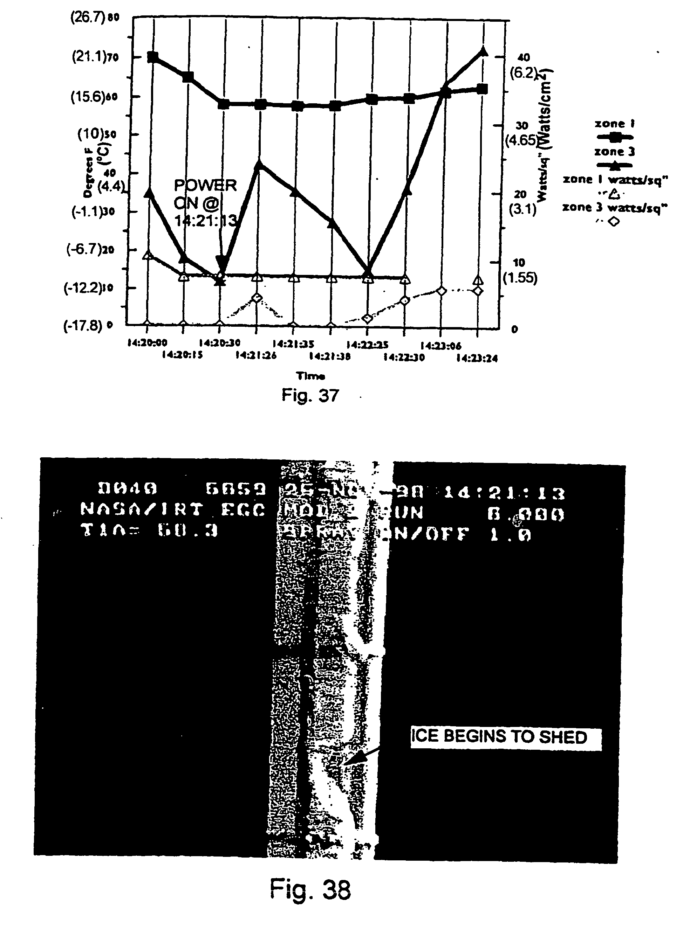

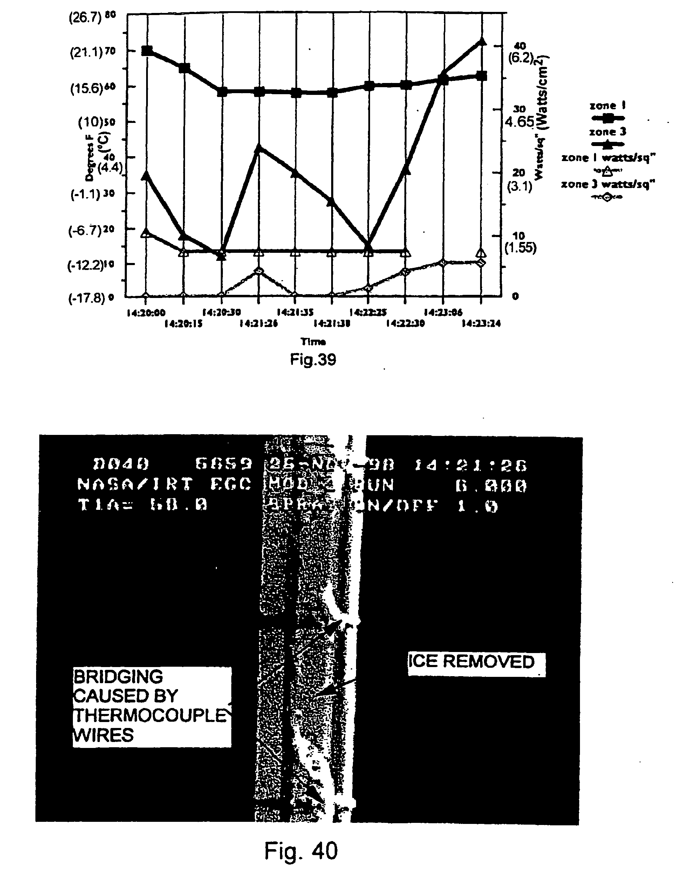

At the beginning of the de-icing sequence, at time 14 hours, 20 minutes, zero seconds (14:20:00), shown in Figure 35, the parting strip and zone 3 have already been heated to 70°F (21.1°C) and 35°F (1.7°C), respectively. At time 14:20:00, the power is turned off in zone 3 and the watt density in zone 3 is zero. (The power is maintained at 8 watts in the parting strip, zone 1, at all times). During the 15 second duration of power off, the temperature of zone 3 falls to below 32°F (0°C), (*i.e.*, about 11°F) (-11.7°C)). At time 14:20:15 runback ice has begun to freeze on the outer surface of zone 3, as is seen in **Figure 36.** In Figure 37, the power is turned on in zone 3 at time 14:20:30 to achieve 5 watts/in.$^2$ (0.78 watts/cm$^2$). By time 14:21:13, ice has already begun to shed from zone 3 **(Figure 38)** and by time 14:21:26 **(Figure 39),** the ice has been shed from zone 3 into the impinging airstream **(Figure 40).**

While the invention has been described herein with reference to the preferred embodiments, it is to be understood that it is not intended to limit the invention to the specific forms disclosed. On the contrary, it is intended to cover all modifications and alternative forms falling within the spirit and scope of the invention as defined in the appended claims.

## Claims

1. An aircraft structure comprising a surface that includes a leading edge (74, 104, 131), and a heat-conducting tape (2, 76) bonded to the surface for electrothermally removing ice from or preventing the formation of ice on the surface, the heat-conducting tape (2, 76) comprising a first area that forms a parting strip (80, 122) having a length disposed spanwise along the leading edge (74, 104, 131), a second area disposed spanwise above and aft of the parting strip (80, 122) forming a first ice accumulation and shedding zone (82, 123), and a third area disposed spanwise below and aft of the parting strip (80, 122), forming a second ice accumulation and shedding zone (84, 124), wherein the heat-conducting tape (2, 76) comprises at least two layers laminated to each other under heat and pressure, the layers comprising (i) an outer heat-conducting layer (22, 130) that is an electrical insulator, and (ii) a nonmetallic electrical and heat-conducting layer connected to a power source, the non-metallic electrical and heat-conducting layer consisting of a flexible monolithic expanded graphite foil sheet (120) having a first thickness in the parting strip (80, 122), a second thickness in the first ice accumulation and shedding zone (82, 123), and a third thickness in the second ice accumulation and shedding zone (84, 124), wherein the thickness of the flexible expanded graphite foil sheet (120) in the parting strip (80, 122) is greater than the thickness of the foil in each of the first and the second ice accumulation and shedding zones (82, 84, 123, 124).

2. The aircraft structure of claim 1, wherein the flexible expanded graphite foil sheet (120) is a continuous sheet comprising a decreasing gradient of thicknesses between the parting strip (80, 122) and the first ice accumulation and shedding zone (82, 123) and between the parting strip (80, 122) and the second ice accumulation and shedding zone (84, 124).

3. The aircraft structure of claim 1 or 2, wherein the thickness of the flexible expanded graphite foil sheet (120) in the parting strip (80, 122), excluding the decreasing thickness gradients, is about 0.005 to about 0.060 inches (about 0.127 mm to about 1.524 mm).

4. The aircraft structure of any one of claims 1 to 3, wherein the thicknesses of the flexible expanded graphite foil sheet (120) in the first and second ice accumulation and shedding zones (82, 84, 123, 124), excluding the thickness gradients, are the same as or different from each other and range from about 0.001 to about 0.050 inches (about 0.025 to about 1.27 mm), preferably from about 0.001 to about 0.030 inches (about 0.025 to about 0.762 mm).

5. The aircraft structure of any one of claims 1 to 4, wherein the flexible expanded graphite foil sheet (120) comprises at least two separate sections selected from the group consisting of a parting strip (80, 122) section, a first ice accumulation and shedding section (82, 123), and a second ice accumulation and shedding section (84, 123), wherein the first and/or the second ice accumulation and shedding sections (82, 84, 123, 124) are separated from the parting strip (80, 122) section by a gap of no greater than 60 mils (1.524 mm).

6. The aircraft structure of any one of claims 1 to 5, wherein the separate sections of the flexible expanded graphite foil sheet (120) are connected to the power source either separately or together by a single set of two terminals.

7. The aircraft structure of any one of claims 1 to 6, wherein the parting strip (80, 122) section or at least one of the ice accumulation and shedding zone sections of the flexible expanded graphite foil sheet (120) comprises a decreasing gradient of thicknesses between the parting strip (80, 122) and the first ice accumulation and shedding zone (82, 123) or between the parting strip (80, 122) and the second ice accumulation and shedding zone (84, 124).

8. The aircraft structure of any one of claims 1 to 7, wherein the flexible expanded graphite foil sheet (120) has a density of about 50 to about 95 lbs./ft$^3$ (about 0.77 g/cm$^3$ to about 1.47 g/cm$^3$), preferably about 70 to about 95 lbs./ft.$^3$ (about 1.07 g/cm$^3$ to about 1,46 g/cm$^3$), and more preferably about 80 to about 95 lbs./ft.$^3$ (about 1.23 g/cm$^3$ to about 1.46 g/cm$^3$).

9. The aircraft structure of any one of claims 1 to 8, wherein the flexible expanded graphite foil sheet (120) has an electrical resistivity of about $2.7 \times 10^{-4}$ to about $3.2 \times 10^{-4}$ ohm-in (about $6.86 \times 10^{-4}$ to about $8.13 \times 10^{-4}$ ohm-cm), preferably about $3.1 \times 10^{-4}$ ohm-in (about $7.87 \times 10^{-4}$ ohm-cm).

10. The aircraft structure of any one of claims 1 to 9, wherein the outer heat-conducting layer (22, 130) is selected from electrically insulating materials having a volume resistivity of about $10^3$ ohm-in to about $10^{12}$ ohm-in (about $2.74 \times 10^3$ ohm-cm to about $2.74 \times 10^{12}$ ohm-cm).

11. The aircraft structure of any one of claims 1 to 10, wherein the outer heat-conducting layer (22, 130) comprises a thermoplastic or a thermosetting material and an inorganic filler that conducts heat.

12. The aircraft structure of claim 11, wherein the inorganic filler is selected from the group consisting of aluminum nitride, boron nitride, alumina, silicon nitride, and mixtures thereof.

13. The aircraft structure of claim 11, wherein the material comprises polyurethane.

14. The aircraft structure of any one of claims 1 to 13, wherein the outer heat-conducting layer (22, 130) has a thermal conductivity of about 0.1 W/M K to about 5 W/M K, preferably about 0.5 W/M K to about 4 W/M K.

15. The aircraft structure of any one of claims 1 to 14, wherein the thickness of the outer heat-conducting layer (22, 130) is about 0.001 inches to about 0.030 inches (about 0.025 mm to about 0.76 mm), preferably about 0.001 inches to about 0.010 inches (about 0.025 mm to about 0.25 mm) and more preferably about 0.005 inches (about 0.13 mm).

16. The aircraft structure of any one of claims 1 to 15, wherein the parting strip (80, 122) has a width that is sufficient to accommodate a change in location of an icing stagnation line along the leading edge (74, 104, 131).

17. The aircraft structure of any one of claims 1 to 16, wherein the width of the parting strip (80, 122) is about 0.25 to about 3 inches (about 0.63 to about 7.62 cm), preferably about 0.5 to about 2.5 inches (about 1.27 to about 6.35 cm) and more preferably about 0.75 to about 1.5 inches (about 1.9 to about 3.8 cm).

18. The aircraft structure of any one of claims 1 to 17, wherein each of the first and second ice accumulation and shedding zones (82, 84, 123, 124) comprises an area approximately equal to its respective area of ice accumulation.

19. The aircraft structure of any one of claims 1 to 18, wherein the first and the second ice accumulation and shedding zones (82, 84, 123, 124) comprise widths that are the same as or different from each other and range from about 1 to about 6 inches (about 2.54 to about 15.24 cm), preferably from about 1.5 to about 5 inches (about 3.8 to about 12.7 cm) and more preferably from about 1.5 to about 3 inches (about 3.81 to about 7.62 cm).

20. The aircraft structure of any one of claims 1 to 19, wherein the power source is operative to supply sufficient power to the flexible expanded graphite foil layer (120) of the heat-conducting tape (2, 76) to maintain a temperature of the outer heat-conducting layer of the parting strip (80, 122) that is above 32 °F (above 0 °C), preferably at about 35 °F to about 45 °F (about 1.6 °C to about 7.2 °C) to prevent the formation of ice on the parting strip (80, 122).

21. The aircraft structure of any one of claims 1 to 20, wherein the temperature is sufficient to produce evaporation of substantially all water droplets impinging on the outer heat-conducting layer (22, 130) of the parting strip (80, 122).

22. The aircraft structure of any one of claims 1 to 21, wherein the temperature is sufficient to prevent freezing of substantially all water droplets impinging on the outer heat-conducting layer (22, 130) of the parting strip (80, 122), wherein the water droplets are allowed to flow aft from the parting strip (80, 122) to the first and/or the second ice accumulation and shedding zones (82, 84, 123, 124) of the heat-conducting tape (2, 76).

23. The aircraft structure of any one of claims 1 to 22, wherein the power supplied to the flexible expanded graphite foil layer of the heat-conducting tape (2, 76) is sufficient to maintain a temperature of the outer heat-conducting layer (22, 130) at the first and the second ice accumulation and shedding zones (82, 84, 123, 124) that does not exceed 32 °F (0 °C) for a first time period sufficient to allow the water droplets to form ice and an ice-to-surface bond on the outer heat-conducting layer (22, 130) of the heat-conducting tape (2, 76) at the first and/or the second ice accumulation and shedding zones (82, 84, 123, 124).

24. The aircraft structure of claim 23, wherein the first time period is about 10 seconds to about 5 minutes, preferably about 30 seconds to about 2 minutes, and more preferred about 45 seconds to about 1.5 minutes.

25. The aircraft structure of any one of claims 1 to 24, wherein power supplied to the flexible expanded graphite foil layer (120) of the heat-conducting tape (2, 76) at the end of the first time period is sufficient to maintain the temperature of the outer heat-conducting layer at the first and the second ice accumulation and shedding zones (82, 84, 123, 124) at greater than 32 °F (0 °C), preferably in a range of about 34 °F to about 40 °F (about 1.1 °C to about 4.5 °C), for a second time period, preferably about 5 seconds to about 60 seconds, sufficient to melt the ice-to-surface bond and to allow the formed ice to be shed into an impinging airstream.

26. The aircraft structure of any one of claims 1 to 25, wherein the heat-conducting tape (2, 76) further comprises an electrically insulating layer (128), wherein the flexible expanded graphite layer (120) is disposed between the outer heat-conducting layer (22, 130) and the insulating layer (128), which preferably is a component of the heat-conducting tape (2, 76) or is a component of the aircraft surface.

**27.** The aircraft structure of claim 26, wherein the insulating layer (128) is a heat insulator.

**28.** The aircraft structure of claim 26 or 27, wherein the insulating layer (128) has a thickness of about 0.005 inches to 0.250 inches (about 0.127 to about 6.35 mm).

**29.** The aircraft structure of any one of claims 1 to 28, wherein the structure comprises a rotor blade or a propeller blade and the heat-conducting tape (2, 76) further comprises an outer erosion-resistant layer (135), which preferably comprises a selection from the group consisting of titanium, nickel, aluminum, stainless steel, and alloys thereof, bonded to the outer heat-conducting layer (22, 130).

**30.** A heat-conducting tape (2, 76) having a length and comprising at least two layers laminated to each other under heat and pressure, the layers comprising (i) an outer heat-conducting layer (22, 130) that is an electrical insulator and (ii) a non-metallic electrical and heat-conducting layer, the non-metallic electrical and heat-conducting layer consisting of a flexible monolithic expanded graphite foil sheet (120) and having a first area along the length of the tape comprising a first thickness, and a second area contiguous with the first area along the length of the tape comprising a second thickness, and a third area contiguous with the first area along the length of the tape and comprising a third thickness, wherein the first area is disposed between the second and third areas, and wherein the thickness of the flexible expanded graphite foil sheet (120) in the first area is greater than the thickness of the foil sheet in each of the second and third areas.

**31.** The heat-conducting tape (2, 76) of claim 30, wherein the flexible expanded graphite foil sheet (120) is a continuous sheet that comprises a decreasing gradient of thicknesses between the first and second areas and between the first and third areas.

**32.** The heat-conducting tape (2, 76) of claim 30 or 31, wherein the thickness of the flexible expanded graphite foil sheet (120) in the first area, excluding the decreasing thickness gradients, is about 0.005 to about 0.060 inches (about 0.127 mm to about 1.524 mm).

**33.** The heat-conducting tape (2, 76) of any one of claims 30 to 32, wherein the thicknesses of the flexible expanded graphite foil sheet (120) in the second and third areas, excluding the thickness gradients, are the same as or different from each other and range from about 0.001 to about 0.050 inches (about 0.025 mm to about 1.27 mm).

**34.** The heat-conducting tape (2, 76) of claim 33, wherein the thicknesses of the foil sheet (120) in the second and third areas range from about 0.001 to about 0.030 inches (about 0.025 mm to about 0.762 mm).

**35.** The heat-conducting tape (2, 76) of any one of claims 30 to 34, wherein the second and/or the third areas of the flexible expanded graphite foil sheet (120) are separated from the first area by a gap of no greater than 60 mils (1.524 mm).

**36.** The heat-conducting tape (2, 76) of any one of claims 30 to 35, wherein the first area or at least one of the second and third areas of the flexible expanded graphite foil sheet (120) comprises a decreasing gradient of thicknesses between the first area and the second area and between the first area and the third area.

**37.** The heat-conducting tape (2, 76) of any one of claims 30 to 36, wherein the flexible expanded graphite foil sheet (120) has an electrical resistivity of about $2.7 \times 10^{-4}$ to about $3.2 \times 10^{4}$ ohm-in (about $6.85 \times 10^{-4}$ to about $8.13 \times 10^{-4}$ ohm-cm), preferably about $3.1 \times 10^{-4}$ ohm-in (about $7.87 \times 10^{-4}$ ohm-cm).

**38.** The heat-conducting tape (2, 76) of any one of claims 30 to 37, wherein the outer heat-conducting layer (22, 130) is selected from electrically insulating materials having a volume resistivity of about $10^{3}$ ohm-in to about $10^{12}$ ohm-in (about $2.74 \times 10^{3}$ ohm-cm to about $2.74 \times 10^{12}$ ohm-cm).

**39.** The heat-conducting tape (2, 76) of claim 38, wherein the outer heat-conducting layer (22, 130) comprises a thermoplastic or a thermosetting material and an inorganic filler, which preferably is selected from the group consisting of aluminum nitride, boron nitride, alumina, silicon nitride, and mixtures thereof, that conducts heat.

**40.** The heat-conducting tape (2, 76) of claim 38 or 39, wherein the material comprises polyurethane.

**41.** The heat-conducting tape (2, 76) of any one of claims 30 to 40, wherein the outer heat-conducting layer (22, 130) has a thermal conductivity of about 0. 1 W/M K to about 5 W/M K, preferably about 0.5 W/M K to about 4 W/M K.

42. The heat-conducting tape (2, 76) of any one of claims 30 to 41, wherein the outer heat-conducting layer (22, 130) has a thickness of about 0.0001 to about 0.030 inches (about 0.002 mm to about 0.762 mm), preferably about 0.001 to about 0.010 inches (about 0.025 mm to about 0.25 mm). And more preferably about 0.005 inches (about 0.127 mm).

43. The heat-conducting tape (2, 76) of any one of claims 30 to 42, wherein the tape is produced by calendering or by vertical pressing.

44. The heat-conducting tape (2, 76) of any one of claims 30 to 43, further comprising an electrically insulating layer (128), wherein the flexible expanded graphite layer (120) is disposed between the outer heat-conducting layer (22, 130) and the insulating layer (128), which preferably is a heat insulator.

45. The heat-conducting tape (2, 76) of claim 44, wherein the insulating layer (128) is bonded to the flexible expanded graphite layer (120) by an adhesive.

46. The heat-conducting tape (2, 76) of any one of claims 30 to 45, wherein the first area has a width of about 0.25 to about 3 inches (about 0.63 cm to about 7.62 cm), preferably about 0.5 to about 2.5 inches (about 1.27 cm to about 6.35 cm), and more preferably about 0.75 to about 1.5 inches (about 1.9 cm to about 3.8 cm).

47. The heat-conducting tape (2, 76) of any one of claims 30 to 46, wherein the second and third areas have widths that are the same as or different from each other and range from about 1 to about 6 inches (about 2.54 cm to about 15.24 cm), preferably from about 1.5 to about 5 inches (about 3.8 cm to about 12.7 cm), and more preferably from about 1 to about 3 inches (about 2.54 cm to about 7.62 cm).

48. The heat-conducting tape (2, 76) of any one of claims 30 to 47, further comprising an outer erosion-resistant layer (135) bonded to the outer heat-conducting layer (22, 130).

49. The heat-conducting tape (2, 76) of any one of claims 30 to 48, wherein the outer erosion-resistant layer (135) is bonded to the outer heat-conducting layer (22, 130) by an adhesive.

50. The heat-conducting tape (2, 76) of claim 48 or 49, wherein the outer erosion-resistant layer (135) comprises a selection from the group consisting of titanium, nickel, aluminum, stainless steel, and alloys thereof.

51. The heat-conducting tape (2, 76) of any one of claims 30 to 50, wherein the tape is bonded to a surface including a leading edge (74, 104, 131) of an aircraft structure, and wherein the flexible expanded graphite foil sheet (120) layer is connected to a power source, for electrothermally removing ice from or preventing the formation of ice on the surface during flight.

52. An aircraft structure comprising a surface that includes a leading edge (74, 104, 131), and a heat-conducting tape (2, 76) bonded to the surface for electrothermally removing ice from or preventing the formation of ice on the surface, the heat-conducting tape (2, 76) comprising a first area that forms a parting strip (80, 122) having a length disposed spanwise along the leading edge (74, 104, 131), a second area disposed spanwise above and aft of the parting strip (80, 122, 142) forming a first ice accumulation and shedding zone (82, 123, 143), and a third area disposed spanwise below and aft of the parting strip (80, 122, 142), forming a second ice accumulation and shedding zone (84, 124, 144),
wherein the heat-conducting tape (2, 76) comprises at least two layers laminated to each other under heat and pressure, the layers comprising (i) an outer heat-conducting layer (22, 130) that is an electrical insulator, and (ii) a nonmetallic electrical and heat-conducting layer connected to a power source, the non-metallic electrical and heat-conducting layer consisting of at least two layered flexible expanded graphite foil sheets (132, 133) and bottom layer (134) of foil having a first thickness in the parting strip (80, 122, 142), a second thickness in the first ice accumulation and shedding zone (82, 123, 143), and a third thickness in the second ice accumulation and shedding zone (84, 124, 144),
wherein the first thickness is greater than the thickness of each of the second and the third thicknesses.

53. The aircraft structure of claim 52, wherein the layers are shaped to provide a decreasing gradient of thicknesses (125, 145) between the parting strip (80, 122, 142) and the first ice accumulation and shedding zone (82, 123, 143) and a decreasing gradient of thickness (126, 146) between the parting strip (80, 122, 142) and the second ice accumulation and shedding zone (84, 124, 144), respectively.

54. The aircraft structure of claim 52 or 53, wherein the foil sheets (132, 133) have thicknesses that are the same as or different from each other and range from about 0.0025 to about 0.047 inches (about 0.063 to about 1.2 mm).

55. The aircraft structure of any one of claims 52 to 54, wherein the flexible expanded graphite foil sheets (132, 133) and the bottom layer (134) of foil comprise at least two separate sections selected from the group consisting of a parting strip (80, 122, 142) section, a first ice accumulation and shedding section (82, 123, 143), and a second ice accumulation and shedding section (84, 123, 144), wherein the first and/or the second ice accumulation and shedding sections (82, 84, 123, 124, 143, 144) are separated from the parting strip (80, 122, 142) section by a gap (140) of no greater than 60 mils (1.524 mm).

56. A heat-conducting tape (2, 76) having a length and comprising at least two layers laminated to each other under heat and pressure, the layers comprising (i) an outer heat-conducting layer (22, 130) that is an electrical insulator and (ii) a non-metallic electrical and heat-conducting layer, the non-metallic electrical and heat-conducting layer consisting of at least two layered flexible expanded graphite foil sheets (132, 133) and bottom layer (134) of foil and having a first area along the length of the tape comprising a first thickness, and a second area contiguous with the first area along the length of the tape comprising a second thickness, and a third area contiguous with the first area along the length of the tape and comprising a third thickness, wherein the first area is disposed between the second and third areas, and
wherein the thickness in the first area is greater than the thickness of each of the thicknesses of the second and third areas.

57. The heat-conducting tape (2, 76) of claim 56, wherein the foil sheets (132, 133) have thicknesses that are the same as or different from each other.

58. The heat-conducting tape (2, 76) of claim 56 or 57, wherein the layered foil sheets (132, 133) form a decreasing gradient of thicknesses between the first and second areas and between the first and third areas.

59. The heat-conducting tape (2, 76) of any one of claims 56 to 58 for electrothermally removing of ice from or preventing the formation of ice on surfaces including a leading edge (74, 104, 131) of an aircraft structure.

**Patentansprüche**

1. Fluggerätanordnung, welche eine Oberfläche umfasst, die eine Vorderkante (74, 104, 131) enthält, und ein wärmeleitendes Band (2, 76), welches an die Oberfläche gebunden ist, um davon elektrothermisch Eis zu entfernen oder um die Bildung von Eis auf der Oberfläche zu verhüten, wobei das wärmeleitende Band (2, 76) einen ersten Bereich umfasst, der einen Trennstreifen (80, 122) bildet mit einer Länge, die überspannend entlang der Vorderkante (74, 104, 131) angeordnet ist, und einen zweiten Bereich, der überspannend über und hinter dem Trennstreifen (80, 122) angeordnet ist und eine erste Eisansatz- und Eisabwurfzone (82, 123) bildet, und einen dritten Bereich, der überspannend unter und hinter dem Trennstreifen (80, 122) angeordnet ist und eine zweite Eisansatz- und Eisabwurfzone (84, 124) bildet,
wobei das wärmeleitende Band (2, 76) mindestens zwei Schichten umfasst, die unter Hitze und Druck aufeinander laminiert sind, wobei die Schichten folgendes umfassen: (i) eine äußere wärmeleitende Schicht (22, 130), die ein elektrischer Isolator ist, und (ii) eine nichtmetallische elektrisch leitende und wärmeleitende Schicht, die mit einer Stromquelle verbunden ist, wobei die nichtmetallische elektrisch leitende und wärmeleitende Schicht aus einem flexiblen monolithischen expandierten Graphitfolienblatt (120) besteht, mit einer ersten Dicke im Trennstreifen (80, 122), einer zweiten Dicke in der ersten Eisansatz- und Eisabwurfzone (82, 123), und einer dritten Dicke in der zweiten Eisansatz- und Eisabwurfzone (84, 124),
wobei die Dicke des flexiblen expandierten Graphitfolienblatts (120) im Trennstreifen (80, 122) größer ist als die Dicke der Folie jeweils in den ersten und in den zweiten Eisansatz- und Eisabwurfzonen (82, 84, 123, 124).

2. Fluggerätanordnung nach Anspruch 1, wobei das flexible expandierte Graphitfolienblatt (120) ein kontinuierliches Blatt ist, welches einen abnehmenden Gradienten in den Dicken zwischen dem Trennstreifen (80, 122) und der ersten Eisansatz- und Eisabwurfzone (82, 123) und zwischen dem Trennstreifen (80, 122) und der zweiten Eisansatz- und Eisabwurfzone (84, 124) aufweist.

3. Fluggerätanordnung nach Anspruch 1 oder 2, wobei die Dicke des flexiblen expandierten Graphitfolienblatts (120) im Trennstreifen (80, 122), ausschließlich der abnehmenden Dickegradienten, ungefähr 0,005 bis ungefähr 0,060 Inch (ungefähr 0,127 mm bis ungefähr 1,524 mm) beträgt.

4. Fluggerätanordnung nach einem der Ansprüche 1 bis 3, wobei die Dicken des flexiblen expandierten Graphitfolienblatts (120) in den ersten und zweiten Eisansatz- und Eisabwurfzonen (82, 84, 123, 124), ausschließlich der Dickegradienten, die gleichen sind oder voneinander verschieden sind und sich zwischen ungefähr 0,001 bis ungefähr 0,050 Inch (ungefähr 0,025 bis ungefähr 1,27 mm) erstrecken, vorzugsweise von ungefähr 0,001 bis ungefähr 0,030 Inch (ungefähr 0,025 bis ungefähr 0,762 mm).

5. Fluggerätanordnung nach einem der Ansprüche 1 bis 4, wobei das flexible expandierte Graphitfolienblatt (120) wenigstens zwei separate Abschnitte umfasst, ausgewählt aus der Gruppe bestehend aus einem Abschnitt eines Trennstreifens (80, 122), einem ersten Eisansatz- und Eisabwurfabschnitt (82, 123), und einem zweiten Eisansatz- und Eisabwurfabschnitt (84, 123), wobei die ersten und/oder die zweiten Eisansatz- und Eisabwurfabschnitte (82, 84, 123, 124) vom Trennstreifenabschnitt (80, 122) durch eine Aussparung voneinander getrennt sind, die nicht größer als 60 Mils (1,524 mm) ist.

6. Fluggerätanordnung nach einem der Ansprüche 1 bis 5, wobei die separaten Abschnitte des flexiblen expandierten Graphitfolienblattes (120) mit der Stromquelle durch einen einzigen Satz von zwei Anschlüssen verbunden sind, entweder getrennt voneinander oder zusammen.

7. Fluggerätanordnung nach einem der Ansprüche 1 bis 6, wobei der Trennstreifenabschnitt (80, 122) oder wenigstens eine der Eisansatz- und Eisabwurfzonenabschnitte des flexiblen expandierten Graphitfolienblatts (120) einen abnehmenden Gradienten in den Dicken zwischen dem Trennstreifen (80, 122) und der ersten Eisansatz- und Eisabwurfzone (82, 123) umfasst oder zwischen dem Trennstreifen (80, 122) und der zweiten Eisansatz- und Eisabwurfzone (84, 124).

8. Fluggerätanordnung nach einem der Ansprüche 1 bis 7, wobei das flexible expandierte Graphitfolienblatt (120) eine Dichte von ungefähr 50 bis ungefähr 95 lbs/ft$^3$ (ungefähr 0,77 g/cm$^3$ bis ungefähr 1,47 g/cm$^3$) aufweist, vorzugsweise ungefähr 70 bis ungefähr 95 lbs/ft$^3$ (ungefähr 1.07 g/cm$^3$ bis ungefähr 1.46 g/cm$^3$), und mehr bevorzugt von ungefähr 80 bis ungefähr 95 lbs/ft$^3$ (ungefähr 1,23 g/cm$^3$ bis ungefähr 1,46 g/cm$^3$).

9. Fluggerätanordnung nach einem der Ansprüche 1 bis 8, wobei das flexible expandierte Graphitfolienblatt (120) einen elektrischen Widerstand von ungefähr $2,7 \times 10^{-4}$ bis ungefähr $3,2 \times 10^{-4}$ ohm-in (ungefähr $6,86 \times 10^{-4}$ bis ungefähr $8,13 \times 10^{-4}$ Ωcm) aufweist, vorzugsweise ungefähr $3,1 \times 10^{-4}$ ohm-in (ungefähr $7,87 \times 10^{-4}$ Ωcm).

10. Fluggerätanordnung nach einem der Ansprüche 1 bis 9, wobei die äußere wärmeleitende Schicht (22, 130) ausgewählt ist aus elektrisch isolierenden Materialien, welche einen Volumenwiderstand von ungefähr $10^3$ ohm-in bis ungefähr $10^{12}$ ohm-in (ungefähr $2,74 \times 10^3$ Ωcm bis ungefähr $2,74 \times 10^{12}$ Ωcm) aufweisen.

11. Fluggerätanordnung nach einem der Ansprüche 1 bis 10, wobei die äußere wärmeleitende Schicht (22, 130) ein thermoplastisches oder ein duroplastisches Material umfasst und einen anorganischen Füllstoff, welcher Wärme leitet.

12. Fluggerätanordnung nach Anspruch 11, wobei der anorganische Füllstoff ausgewählt ist aus der Gruppe bestehend aus Aluminiumnitrid, Bornitrid, Aluminiumoxid, Siliciumnitrid, und Mischungen davon.

13. Fluggerätanordnung nach Anspruch 11, wobei das Material Polyurethan umfasst.

14. Fluggerätanordnung nach einem der Ansprüche 1 bis 13, wobei die äußere wärmeleitende Schicht (22, 130) eine thermische Leitfähigkeit von ungefähr 0,1 W/M K bis ungefähr 5 W/M K aufweist, vorzugsweise ungefähr 0,5 W/M K bis ungefähr 4 W/M K.

15. Fluggerätanordnung nach einem der Ansprüche 1 bis 14, wobei die Dicke der äußeren wärmeleitenden Schicht (22, 130) ungefähr 0,001 Inch bis ungefähr 0,030 Inch (ungefähr 0,025 mm bis ungefähr 0,76 mm) beträgt, vorzugsweise ungefähr 0,001 Inch bis ungefähr 0,010 Inch (ungefähr 0,025 mm bis ungefähr 0.25 mm), und mehr bevorzugt ungefähr 0,005 Inch (ungefähr 0,13 mm).

**16.** Fluggerätanordnung nach einem der Ansprüche 1 bis 15, wobei der Trennstreifen (80, 122) eine Breite aufweist, die ausreicht, einen Lagewechsel einer Eisstagnationslinie entlang der Vorderkante (74, 104, 131) zu gewährleisten.

**17.** Fluggerätanordnung nach einem der Ansprüche 1 bis 16, wobei die Breite des Trennstreifens (80, 122) ungefähr 0,25 bis ungefähr 3 Inch (ungefähr 0,63 bis ungefähr 7,62 cm) beträgt, vorzugsweise ungefähr 0,5 Inch bis ungefähr 2,5 Inch (ungefähr 1,27 bis ungefähr 6,35 cm), und mehr bevorzugt ungefähr 0,75 bis ungefähr 1,5 Inch (ungefähr 1,9 bis ungefähr 3,8 cm).

**18.** Fluggerätanordnung nach einem der Ansprüche 1 bis 17, wobei jede der ersten und zweiten Eisansatz- und Eisabwurfzonen (82, 84, 123, 124) einen Bereich umfasst, der ungefähr gleich seines jeweiligen Eisansatzbereichs ist.

**19.** Fluggerätanordnung nach einem der Ansprüche 1 bis 18, wobei die ersten und die zweiten Eisansatz- und Eisabwurfzonen (82, 84, 123, 124) Breiten umfassen, welche gleich sind oder voneinander verschieden sind, und sich von ungefähr 1 bis ungefähr 6 Inch (ungefähr 2,54 bis ungefähr 15,24 cm) erstrecken, vorzugsweise von ungefähr 1,5 bis ungefähr 5 Inch (ungefähr 3,8 bis ungefähr 12,7 cm), und mehr bevorzugt von ungefähr 1,5 bis ungefähr 3 Inch (ungefähr 3,81 bis ungefähr 7,62 cm).

**20.** Fluggerätanordnung nach einem der Ansprüche 1 bis 19, wobei die Stromquelle so arbeitet, dass sie die flexible expandierte Graphitfolienschicht (120) des wärmeleitenden Bandes (2, 76) ausreichend mit Strom versorgt, um eine Temperatur der äußeren wärmeleitenden Schicht des Trennstreifens (80, 122) aufrecht zu erhalten, die mehr als 32 °F (mehr als 0 °C) beträgt, vorzugsweise ungefähr 35 °F bis ungefähr 45 °F (ungefähr 1,6 °C bis ungefähr 7,2 °C), um die Bildung von Eis auf dem Trennstreifen (80, 122) zu verhüten.

**21.** Fluggerätanordnung nach einem der Ansprüche 1 bis 20, wobei die Temperatur ausreicht, um die Verdampfung von im Wesentlichen aller Wassertropfen zu bewirken, die auf die äußere wärmeleitende Schicht (22, 130) des Trennstreifens (80, 122) auftreffen.

**22.** Fluggerätanordnung nach einem der Ansprüche 1 bis 21, wobei die Temperatur ausreicht, um das Gefrieren von im Wesentlichen aller Wassertropfen zu verhüten, die auf die äußere wärmeleitende Schicht (22, 130) des Trennstreifens (80, 122) auftreffen, wobei es den Wassertropfen ermöglicht wird, vom Trennstreifen (80, 122) nach hinten zu fließen zu den ersten und/oder den zweiten Eisansatz- und Eisabwurfzonen (82, 84, 123, 124) des wärmeleitenden Bandes (2,76).

**23.** Fluggerätanordnung nach einem der Ansprüche 1 bis 22, wobei der Strom, mit dem die flexible expandierte Graphitfolienschicht des wärmeleitenden Bandes (2, 76) versorgt wird, ausreicht, um eine Temperatur der äußeren wärmeleitenden Schicht (22, 130) an den ersten und den zweiten Eisansatz- und Eisabwurfzonen (82, 84, 123, 124) aufrecht zu erhalten, welche nicht 32 °F (0 °C) während eines ersten Zeitabschnitts übersteigt, welche es den Wassertropfen ermöglicht, Eis zu bilden und eine Bindung vom Eis zur Oberfläche auf der äußeren wärmeleitenden Schicht (22, 130) des wärmeleitenden Bandes (2, 76) an den ersten und/oder den zweiten Eisansatz- und Eisabwurfzonen (82, 84, 123, 124).

**24.** Fluggerätanordnung nach Anspruch 23, wobei der erste Zeitabschnitt ungefähr 10 Sekunden bis ungefähr 5 Minuten beträgt, vorzugsweise ungefähr 30 Sekunden bis ungefähr 2 Minuten, und mehr bevorzugt ungefähr 45 Sekunden bis ungefähr 1,5 Minuten.

**25.** Fluggerätanordnung nach einem der Ansprüche 1 bis 24, wobei der Strom, mit dem die flexible expandierte Graphitfolienschicht (120) des wärmeleitenden Bandes (2, 76) am Ende des ersten Zeitabschnitts versorgt wird, ausreicht, um die Temperatur der äußeren wärmeleitenden Schicht an den ersten und den zweiten Eisansatz- und Eisabwurfzonen (82, 84, 123, 124) bei einer Temperatur zu halten, die größer als 32 °F (0 °C) ist, vorzugsweise in einem Bereich von ungefähr 34 °F bis ungefähr 40 °F (ungefähr 1,1 °C bis ungefähr 4,5 °C) während eines zweiten Zeitabschnitts, vorzugsweise ungefähr 5 Sekunden bis ungefähr 60 Sekunden, ausreichend um die Bindung des Eises zur Oberfläche zu schmelzen und es dem gebildeten Eis zu ermöglichen, in einen auftreffenden Luftstrom abgeworfen zu werden.

**26.** Fluggerätanordnung nach einem der Ansprüche 1 bis 25, wobei das wärmeleitende Band (2, 76) weiter eine elektrisch isolierende Schicht (128) umfasst, wobei die flexible expandierte Graphitschicht (120) zwischen der äußeren wärmeleitenden Schicht (22, 130) und der isolierenden Schicht (128) angeordnet ist, welche vorzugsweise eine Komponente des wärmeleitenden Bandes (2, 76) ist oder eine Komponente der Fluggerätoberfläche ist.

27. Fluggerätanordnung nach Anspruch 26, wobei die isolierende Schicht (128) ein Wärmeisolator ist.

28. Fluggerätanordnung nach Anspruch 26 oder 27, wobei die isolierende Schicht (128) eine Dicke von ungefähr 0,005 Inch bis ungefähr 0,025 Inch (ungefähr 0,127 bis ungefähr 6,35 mm) aufweist.

29. Fluggerätanordnung nach einem der Ansprüche 1 bis 28, wobei die Anordnung ein Rotorblatt oder ein Propellerblatt umfasst, und das wärmeleitende Band (2, 76) weiter eine äußere erosionsbeständige Schicht (135) umfasst, welche vorzugsweise eine Auswahl aus der Gruppe bestehend aus Titan, Nickel, Aluminium, Edelstahl, und Legierungen davon umfasst, gebunden an die äußere wärmeleitende Schicht (22, 130).

30. Wärmeleitendes Band (2, 76), welches eine Länge aufweist und wenigstens zwei Schichten umfasst, die unter Wärme und Druck aufeinander laminiert sind, wobei die Schichten folgendes umfassen: (i) eine äußere wärmeleitende Schicht (22, 130), welche ein elektrischer Isolator ist, und (ii) eine nichtmetallische elektrisch leitende und wärmeleitende Schicht, wobei die nichtmetallische elektrisch leitende und wärmeleitende Schicht aus einem flexiblen monolithischen expandierten Graphitfolienblatt (120) besteht und einen ersten Bereich entlang der Länge des Bandes aufweist, der eine erste Dicke hat, und einen zweiten Bereich, der an den ersten Bereich entlang der Länge des Bandes angrenzt, der eine zweite Dicke hat, und einen dritten Bereich, der an den ersten Bereich entlang der Länge des Bandes angrenzt und eine dritte Dicke hat, wobei der erste Bereich zwischen den zweiten und dritten Bereichen angeordnet ist, und wobei die Dicke des flexiblen expandierten Graphitfolienblatts (120) im ersten Bereich größer als die Dicke des Folienblatts in jedem der zweiten und dritten Bereiche ist.

31. Wärmeleitendes Band (2, 76) nach Anspruch 30, wobei das flexible expandierte Graphitfolienblatt (120) ein kontinuierliches Blatt ist, welches einen abnehmenden Gradienten in den Dicken zwischen den ersten und zweiten Bereichen und zwischen den ersten und dritten Bereichen umfasst.

32. Wärmeleitendes Band (2, 76) nach Anspruch 30 oder 31, wobei die Dicke des flexiblen expandierten Graphitfolienblatts (120) im ersten Bereich, ausschließlich der abnehmenden Dickegradienten, ungefähr 0,005 bis ungefähr 0,060 Inch (ungefähr 0,127 mm bis ungefähr 1,524 mm) beträgt.

33. Wärmeleitendes Band (2, 76) nach einem der Ansprüche 30 bis 32, wobei die Dicken des flexiblen expandierten Graphitfolienblatts (120) in den zweiten und dritten Bereichen, ausschließlich der Dickegradienten, gleich sind oder voneinander verschieden sind und sich zwischen ungefähr 0,001 bis ungefähr 0,050 Inch (ungefähr 0,025 mm bis ungefähr 1,27 mm) erstrecken.

34. Wärmeleitendes Band (2, 76) nach Anspruch 33, wobei die Dicken des Folienblatts (120) sich in den zweiten und dritten Bereichen von ungefähr 0,001 bis ungefähr 0,030 Inch (ungefähr 0,025 mm bis ungefähr 0,762 mm) erstrecken.

35. Wärmeleitendes Band (2, 76) nach einem der Ansprüche 30 bis 34, wobei die zweiten und/oder die dritten Bereiche des flexiblen expandierten Graphitfolienblatts (120) vom ersten Bereich durch eine Aussparung getrennt sind, die nicht größer als 60 Mils (1,524 mm) ist.

36. Wärmeleitendes Band (2, 76) nach einem der Ansprüche 30 bis 35, wobei der erste Bereich oder wenigstens einer der zweiten und dritten Bereiche des flexiblen expandierten Graphitfolienblatts (120) einen abnehmenden Dickegradienten zwischen dem ersten Bereich und dem zweiten Bereich und zwischen dem ersten Bereich und dem dritten Bereich umfasst.

37. Wärmeleitendes Band (2, 76) nach einem der Ansprüche 30 bis 36, wobei das flexible expandierte Graphitfolienblatt (120) einen elektrischen Widerstand von ungefähr $2,7 \times 10^{-4}$ bis ungefähr $3,2 \times 10^{-4}$ ohm-in (ungefähr $6,85 \times 10^{-4}$ bis ungefähr $8,13 \times 10^{-4}$ $\Omega$cm) aufweist, vorzugsweise ungefähr $3,1 \times 10^{-4}$ ohm-in (ungefähr $7,87 \times 10^{-4}$ $\Omega$cm).

38. Wärmeleitendes Band (2, 76) nach einem der Ansprüche 30 bis 37, wobei die äußere wärmeleitende Schicht (22, 130) ausgewählt ist aus elektrisch isolierenden Materialien, welche einen Volumenwiderstand von ungefähr $10^3$ ohm-in bis ungefähr $10^{12}$ ohm-in (ungefähr $2,74 \times 10^3$ $\Omega$cm bis ungefähr $2,74 \times 10^{12}$ $\Omega$cm) aufweisen.

39. Wärmeleitendes Band (2, 76) nach Anspruch 38, wobei die äußere wärmeleitende Schicht (22, 130) ein thermoplastisches oder ein duroplastisches Material und einen anorganischen Füllstoff umfasst, welcher vorzugsweise ausgewählt ist aus der Gruppe bestehend aus Aluminiumnitrid, Bomitrid, Aluminiumoxid, Siliziumnitrid, und Mischungen davon, welche Wärme leiten.

40. Wärmeleitendes Band (2, 76) nach Anspruch 38 oder 39, wobei das Material Polyurethan umfasst.

41. Wärmeleitendes Band (2, 76) nach einem der Ansprüche 30 bis 40, wobei die äußere wärmeleitende Schicht (22, 130) eine thermische Leitfähigkeit von ungefähr 0,1 W/M K bis ungefähr 5 W/M K umfasst, vorzugsweise ungefähr 0,5 W/M K bis ungefähr 4 W/M K.

42. Wärmeleitendes Band (2, 76) nach einem der Ansprüche 30 bis 41, wobei die äußere wärmeleitende Schicht (22, 130) eine Dicke von ungefähr 0,0001 bis ungefähr 0,030 Inch (ungefähr 0,002 mm bis ungefähr 0,762 mm) aufweist, vorzugsweise ungefähr 0,001 bis ungefähr 0,010 Inch (ungefähr 0,025 mm bis ungefähr 0,25 mm), und mehr bevorzugt ungefähr 0,005 Inch (ungefähr 0,127 mm).

43. Wärmeleitendes Band (2, 76) nach einem der Ansprüche 30 bis 42, wobei das Band durch Kalendrieren oder durch vertikales Pressen hergestellt wird.

44. Wärmeleitendes Band (2, 76) nach einem der Ansprüche 30 bis 43, weiter umfassend eine elektrisch isolierende Schicht (128), wobei die flexible expandierte Graphitschicht (120) zwischen der äußeren wärmeleitenden Schicht (22, 130) und der isolierenden Schicht (128) angebracht ist, welche vorzugsweise ein Wärmeisolator ist.

45. Wärmeleitendes Band (2, 76) nach Anspruch 44, wobei die isolierende Schicht (128) an die flexible expandierte Graphitschicht (120) durch einen Klebstoff gebunden ist.

46. Wärmeleitende Schicht (2, 76) nach einem der Ansprüche 30 bis 45, wobei der erste Bereich eine Breite von ungefähr 0,25 bis ungefähr 3 Inch (ungefähr 0,63 cm bis ungefähr 7,62 cm) aufweist, vorzugsweise ungefähr 0,5 bis ungefähr 2,5 Inch (ungefähr 1,27 bis ungefähr 6,35 cm), und mehr bevorzugt ungefähr 0,75 bis ungefähr 1,5 Inch (ungefähr 1,9 cm bis ungefähr 3,8 cm).

47. Wärmeleitendes Band (2, 76) nach einem der Ansprüche 30 bis 46, wobei die zweiten und dritten Bereiche Breiten aufweisen, welche gleich sind oder voneinander verschieden sind, und sich von ungefähr 1 bis ungefähr 6 Inch (ungefähr 2,54 cm bis ungefähr 15,24 cm) erstrecken, vorzugsweise von ungefähr 1,5 bis ungefähr 5 Inch (ungefähr 3,8 cm bis ungefähr 12,7 cm), und mehr bevorzugt von ungefähr 1 bis ungefähr 3 Inch (ungefähr 2,54 cm bis ungefähr 7,62 cm).

48. Wärmeleitendes Band (2, 76) nach einem der Ansprüche 30 bis 47, weiter umfassend eine äußere erosionsbeständige Schicht (135), die an die äußere wärmeleitende Schicht (22, 130) gebunden ist.

49. Wärmeleitendes Band (2, 76) nach einem der Ansprüche 30 bis 48, wobei die äußere erosionsbeständige Schicht (135) an die äußere wärmeleitende Schicht (22, 130) durch einen Klebstoff gebunden ist.

50. Wärmeleitendes Band (2, 76) nach Anspruch 48 oder 49, wobei die äußere erosionsbeständige Schicht (135) eine Auswahl aus der Gruppe bestehend aus Titan, Nickel, Aluminium, Edelstahl, und Legierungen davon umfasst.

51. Wärmeleitendes Band (2, 76) nach einem der Ansprüche 30 bis 50, wobei das Band an eine Oberfläche gebunden ist, welche eine Vorderkante (74, 104, 131) einer Fluggerätanordnung umfasst, und wobei die Schicht des flexiblen expandierten Graphitfolienblatts (120) mit einer Stromquelle verbunden ist, um elektrothermisch Eis von der Oberfläche zu entfernen oder um die Bildung von Eis auf der Oberfläche während des Flugs zu verhüten.

52. Fluggerätanordnung, welche eine Oberfläche umfasst, welche eine Vorderkante (74, 104, 131) beinhaltet, und ein wärmeleitendes Band (2, 76), welches an die Oberfläche gebunden ist, um elektrothermisch Eis davon zu entfernen oder um die Bildung von Eis auf der Oberfläche zu verhüten, wobei das wärmeleitende Band (2, 76) einen ersten Bereich umfasst, welcher einen Trennstreifen (80, 122) bildet, der eine Länge aufweist, die überspannend entlang der Vorderkante (74, 104, 131) angeordnet ist, einen zweiten Bereich, der überspannend über und hinter dem Trennstreifen (80, 122, 142) angeordnet ist und eine erste Eisansatz- und Eisabwurfzone (82, 123, 143) bildet, und einen dritten Bereich, der überspannend unter und hinter dem Trennstreifen (80, 122, 142) angeordnet ist, und eine zweite Eisansatz- und Eisabwurfzone (84, 124, 144) bildet, wobei das wärmeleitende Band (2, 76) wenigstens zwei Schichten umfasst, welche unter Wärme und Druck aufeinander laminiert sind, wobei die Schichten folgendes umfassen: (i) eine äußere wärmeleitende Schicht (22, 130), welche ein elektrischer Isolator ist, und (ii) eine nichtmetallische elektrisch leitende und wärmeleitende Schicht, die mit einer Stromquelle verbunden ist, wobei die nichtmetallische elektrisch leitende und wärmeleitende Schicht aus wenigstens zwei geschichteten flexiblen expandierten Graphitfolienblättern (132, 133) und einer Grundschicht (134) der Folie besteht, mit einer ersten Dicke im Trennstreifen (80, 122, 142), einer zweiten Dicke in der ersten Eisansatz- und Eisabwurfzone (82, 123, 143), und einer dritte Dicke in der zweiten Eisansatz- und Eisabwurfzone (84, 124, 144), wobei die erste Dicke größer ist als die Dicke einer jeden der zweiten und der dritten Dicken.

53. Fluggerätanordnung nach Anspruch 52, wobei die Schichten so gestaltet sind, dass sie jeweils einen abnehmenden Gradienten in den Dicken (125, 145) zwischen dem Trennstreifen (80, 122, 142) und der ersten Eisansatz- und Eisabwurfzone (82, 123, 143) bereitstellen, und einen abnehmenden Dickegrandienten (126, 146) zwischen dem Trennstreifen (80, 122, 142) und der zweiten Eisansatz- und Eisabwurfzone (84, 124, 144).

54. Fluggerätanordnung nach Anspruch 52 oder 53, wobei die Folienblätter (132, 133) Dicken aufweisen, die gleich sind oder voneinander verschieden sind und sich zwischen ungefähr 0,0025 bis ungefähr 0,047 Inch (ungefähr 0,063 bis ungefähr 1,2 mm) erstrecken.

55. Fluggerätanordnung nach einem der Ansprüche 52 bis 54, wobei die flexiblen expandierten Graphitfolienblätter (132, 133) und die Grundschicht (134) der Folie wenigstens zwei separate Abschnitte umfassen, welche ausgewählt sind aus der Gruppe bestehend aus einem Abschnitt eines Trennstreifens (80, 122, 142), einem ersten Eisansatz- und Eisabwurfabschnitt (82, 123, 143) und einem zweiten Eisansatz- und Eisabwurfabschnitt (84, 123, 144), wobei die ersten und/oder die zweiten Eisansatz- und Eisabwurfabschnitte (82, 84, 123, 124, 143, 144) vom Abschnitt des Trennstreifens (80, 122, 142) durch eine Aussparung (140) getrennt sind, die nicht größer als 60 Mils (1,524 mm) ist.

56. Wärmeleitendes Band (2, 76), welches eine Länge aufweist und wenigstens zwei Schichten umfasst, die unter Wärme und Druck aufeinander laminiert sind, wobei die Schichten folgendes umfassen: (i) eine äußere wärmeleitende Schicht (22, 130), welche ein elektrischer Isolator ist, und (ii) eine nichtmetallische elektrisch leitende und wärmeleitende Schicht, wobei die nichtmetallische elektrisch leitende und wärmeleitende Schicht aus wenigstens zwei geschichteten flexiblen expandierten Graphitfolienblättern (132, 133) und einer Grundschicht (134) der Folie besteht, und einen ersten Bereich entlang der Länge des Bandes aufweist, welcher eine erste Dicke hat, und einen zweiten Bereich, der entlang der Länge des Bandes an den ersten Bereich angrenzt und eine zweite Dicke hat, und einen dritten Bereich, der an den ersten Bereich entlang der Länge des Bandes angrenzt und eine dritte Dicke hat, wobei der erste Bereich zwischen den zweiten und dritten Bereichen angeordnet ist, und wobei die Dicke im ersten Bereich größer ist als die Dicke einer jeden der Dicken der zweiten und dritten Bereiche.

57. Wärmeleitendes Band (2, 76) nach Anspruch 56, wobei die Folienblätter (132, 133) Dicken aufweisen, welche gleich sind oder voneinander verschieden sind.

58. Wärmeleitendes Band (2, 76) nach Anspruch 56 oder 57, wobei die geschichteten Folienblätter (132, 133) einen abnehmenden Gradienten in den Dicken zwischen den ersten und zweiten Bereichen und zwischen den ersten und dritten Bereichen bilden.

59. Wärmeleitendes Band (2, 76) nach einem der Ansprüche 56 bis 58 zum elektrothermischen Entfernen von Eis von Oberflächen oder zur Verhütung der Bildung von Eis auf Oberflächen, welche eine Vorderkante (74, 104, 131) einer Fluggerätanordnung aufweisen.

**Revendications**

1. Structure d'aéronef comprenant une surface qui comporte un bord d'attaque (74, 104, 131), et une bande thermiquement conductrice (2, 76) collée sur la surface pour enlever le givre de façon électrothermique ou empêcher la formation de givre sur la surface, la bande thermiquement conductrice (2, 76) comprenant une première partie qui forme un ruban de séparation (80, 122) ayant une longueur disposée dans le sens de l'envergure le long du bord d'attaque (74, 104, 131), une deuxième partie disposée dans le sens de l'envergure au-dessus et à l'arrière du ruban de séparation (80, 122) formant une première zone d'accumulation et d'évacuation du givre (82, 123), et une troisième partie disposée dans le sens de l'envergure en dessous et à l'arrière du ruban de séparation (80, 122), formant une seconde zone d'accumulation et d'évacuation du givre (84, 124),
dans laquelle la bande thermiquement conductrice (2, 76) comprend au moins deux couches stratifiées l'une sur l'autre par la chaleur et sous pression, les couches comprenant (i) une couche thermiquement conductrice externe (22, 130) qui est un isolant électrique, et (ii) une couche électriquement et thermiquement conductrice non métallique connectée à une source de puissance, la couche électriquement et thermiquement conductrice non métallique consistant en une feuille de graphite expansé monolithique souple (120) ayant une première épaisseur dans le ruban de séparation (80, 122), une deuxième épaisseur dans la première zone d'accumulation et d'évacuation du givre (82, 123), et une troisième épaisseur dans la seconde zone d'accumulation et d'évacuation du givre (84, 124), dans laquelle l'épaisseur de la feuille de graphite expansé monolithique souple (120) dans le ruban de séparation (80, 122) est supérieure à l'épaisseur de la feuille dans chacune des première et seconde zones d'accumulation et d'évacuation du givre (82, 84, 123, 124).

2. Structure d'aéronef selon la revendication 1, dans laquelle la feuille de graphite expansé monolithique souple (120) est une feuille continue comprenant un gradient décroissant d'épaisseurs entre le ruban de séparation (80, 122) et la première zone d'accumulation et d'évacuation du givre (82, 123) et entre le ruban de séparation (80, 122) et la seconde zone d'accumulation et d'évacuation du givre (84, 124).

3. Structure d'aéronef selon la revendication 1 ou 2, dans laquelle l'épaisseur de la feuille de graphite expansé monolithique souple (120) dans le ruban de séparation (80, 122), à l'exclusion des gradients d'épaisseurs décroissants, est d'environ 0,005 à environ 0,060 pouce (environ 0,127 mm à environ 1,524 mm).

4. Structure d'aéronef selon l'une quelconque des revendications 1 à 3, dans laquelle les épaisseurs de la feuille de graphite expansé monolithique souple (120) dans les première et seconde zones d'accumulation et d'évacuation du givre (82, 84, 123, 124), à l'exclusion des gradients d'épaisseurs, sont les mêmes ou sont différentes les unes des autres et sont dans la plage d'environ 0,001 à environ 0,050 pouce (environ 0,025 à environ 1,27 mm), de préférence entre environ 0,001 et environ 0,030 pouce (environ 0,025 à environ 0,762 mm).

5. Structure d'aéronef selon l'une quelconque des revendications 1 à 4, dans laquelle la feuille de graphite expansé monolithique souple (120) comprend au moins deux sections séparées choisies dans le groupe constitué par une section de ruban de séparation (80, 122), une première section d'accumulation et d'évacuation du givre (82, 123), et une seconde section d'accumulation et d'évacuation du givre (84, 123), dans laquelle les première et/ou seconde sections d'accumulation et d'évacuation du givre (82, 84, 123, 124) sont séparées de la section de ruban de séparation (80, 122) par un écartement non supérieur à 60 millièmes de pouce (1,524 mm).

6. Structure d'aéronef selon l'une quelconque des revendications 1 à 5, dans laquelle les sections séparées de la feuille de graphite expansé monolithique souple (120) sont connectées à la source de puissance soit séparément soit ensemble par un seul ensemble de deux bornes.

7. Structure d'aéronef selon l'une quelconque des revendications 1 à 6, dans laquelle la section de ruban de séparation (80, 122), ou au moins l'une des sections de zone d'accumulation et d'évacuation du givre de la feuille de graphite expansé monolithique souple (120), comprend un gradient décroissant d'épaisseurs entre le ruban de séparation (80, 122) et la première zone d'accumulation et d'évacuation du givre (82, 123), ou entre le ruban de séparation (80, 122) et la seconde zone d'accumulation et d'évacuation du givre (84, 124).

8. Structure d'aéronef selon l'une quelconque des revendications 1 à 7, dans laquelle la feuille de graphite expansé monolithique souple (120) a une densité d'environ 50 à environ 95 livres/pied$^3$ (environ 0,77 g/cm$^3$ à environ 1,47 g/cm$^3$), de manière préférée d'environ 70 à environ 95 livres/pied$^3$ (environ 1,07 g/cm$^3$ à environ 1,46 g/cm$^3$), et de manière davantage préférée d'environ 80 à environ 95 livres/pied$^3$ (environ 1,23 g/cm$^3$ à environ 1,46 g/cm$^3$).

9. Structure d'aéronef selon l'une quelconque des revendications 1 à 8, dans laquelle la feuille de graphite expansé monolithique souple (120) a une résistivité électrique d'environ $2,7 \times 10^{-4}$ à environ $3,2 \times 10^{-4}$ ohm-pouce (environ $6,86 \times 10^{-4}$ à environ $8,13 \times 10^{-4}$ ohm-cm), de préférence d'environ $3,1 \times 10^{-4}$ ohm-pouce (environ $7,87 \times 10^{-4}$ ohm-cm).

10. Structure d'aéronef selon l'une quelconque des revendications 1 à 9, dans laquelle la couche thermiquement conductrice externe (22, 130) est choisie dans un groupe constitué par des matériaux isolants électriquement ayant une résistivité volumique d'environ $10^3$ ohm-pouce à environ $10^{12}$ ohm-pouce (environ $2,74 \times 10^3$ ohm-cm à environ $2,74 \times 10^{12}$ ohm-cm).

11. Structure d'aéronef selon l'une quelconque des revendications 1 à 10, dans laquelle la couche thermiquement conductrice externe (22, 130) comprend un matériau thermoplastique ou thermodurcissable et un matériau de remplissage inorganique qui conduit la chaleur.

**12.** Structure d'aéronef selon la revendication 11, dans laquelle le matériau de remplissage inorganique est choisi parmi le groupe constitué par le nitrure d'aluminium, le nitrure de bore, l'alumine, le nitrure de silicium, et leurs mélanges.

**13.** Structure d'aéronef selon la revendication 11, dans laquelle le matériau comprend du polyurethane.

**14.** Structure d'aéronef selon l'une quelconque des revendications 1 à 13, dans laquelle la couche thermiquement conductrice (22, 130) a une conductivité thermique d'environ 0,1 W/M K à environ 5 W/M K, de préférence d'environ 0,5 W/M K à environ 4 W/M K.

**15.** Structure d'aéronef selon l'une quelconque des revendications 1 à 14, dans laquelle l'épaisseur de la couche thermiquement conductrice externe (22, 130) est d'environ 0,001 pouce à environ 0,030 pouce (environ 0,025 mm à environ 0,76 mm), de préférence d'environ 0,001 pouce à environ 0,010 pouce (d'environ 0,025 mm à environ 0,25 mm) et de manière davantage préférée d'environ 0,005 pouce (environ 0,13 mm).

**16.** Structure d'aéronef selon l'une quelconque des revendications 1 à 15, dans laquelle le ruban de séparation (80, 122) a une largeur qui est suffisante pour accepter une modification de la position d'une ligne de stagnation du givre le long du bord d'attaque (74, 104,131).

**17.** Structure d'aéronef selon l'une quelconque des revendications 1 à 16, dans laquelle la largeur du ruban de séparation (80, 122) est d'environ 0,25 à environ 3 pouces (environ 0,63 à environ 7,62 cm), de préférence d'environ 0,5 à environ 2,5 pouces (environ 1,27 à environ 6,35 cm) et de manière davantage préférée d'environ 0,75 à environ 1,5 pouces (environ 1,9 à environ 3,8 cm).

**18.** Structure d'aéronef selon l'une quelconque des revendications 1 à 17, dans laquelle chacune des première et seconde zones d'accumulation et d'évacuation du givre (82, 84, 123, 124) comprend une partie approximativement égale à sa partie respective d'accumulation du givre.

**19.** Structure d'aéronef selon l'une quelconque des revendications 1 à 18, dans laquelle les première et seconde zones d'accumulation et d'évacuation du givre (82, 84, 123, 124) comprennent des largeurs qui sont les mêmes ou qui sont différentes les unes des autres et comprises dans la plage d'environ 1 à environ 6 pouces (environ 2,54 à environ 15,24 cm), de préférence d'environ 1,5 à environ 5 pouces (environ 3,8 à environ 12,7 cm) et de manière davantage préférée d'environ 1,5 à environ 3 pouces (environ 3,81 à environ 7,62 cm).

**20.** Structure d'aéronef selon l'une quelconque des revendications 1 à 19, dans laquelle la source de puissance est opérationnelle pour fournir une puissance suffisante à la feuille de graphite expansé monolithique souple (120) de la bande thermiquement conductrice (2, 76) pour maintenir une température de la couche thermiquement conductrice externe du ruban de séparation (80, 122) au-dessus de 32 °F (au-dessus de 0 °C) de préférence entre environ 35 °F environ 45 °F (environ 1,6 °C à environ 7,2 °C) pour empêcher la formation de givre sur le ruban de séparation (80, 122).

**21.** Structure d'aéronef selon l'une quelconque des revendications 1 à 20, dans laquelle la température est suffisante pour produire une évaporation de sensiblement toutes les gouttelettes d'eau qui convergent sur la couche thermiquement conductrice externe (22, 130) du ruban de séparation (80, 122).

**22.** Structure d'aéronef selon l'une quelconque des revendications 1 à 21, dans laquelle la température est suffisante pour empêcher le gel de sensiblement toutes les gouttelettes d'eau convergeant sur la couche thermiquement conductrice externe (22, 130) du ruban de séparation (80, 122), de sorte que les gouttelettes d'eau peuvent s'écouler vers l'arrière depuis le ruban de séparation (80, 122) jusqu'aux premières et/ou secondes zones d'accumulation et d'évacuation du givre (82, 84, 123, 124) de la bande thermiquement conductrice (2, 76).

**23.** Structure d'aéronef selon l'une quelconque des revendications 1 à 22, dans laquelle la puissance fournie à la feuille de graphite expansé monolithique souple de la bande thermiquement conductrice (2, 76) est suffisante pour maintenir une température de la couche thermiquement conductrice externe (22, 130) au niveau des première et seconde zones d'accumulation et d'évacuation du givre (82, 84, 123, 124) à un niveau qui ne dépasse pas 32 °F (0 °C) pendant un premier délais suffisant pour permettre aux gouttelettes d'eau de former du givre et une liaison givre-surface sur la couche thermiquement conductrice externe (22, 130) de la bande thermiquement conductrice (2, 76) au niveau des première et/ou seconde zones d'accumulation et d'évacuation du givre (82, 84, 123, 124).

24. Structure d'aéronef selon la revendication 23, dans laquelle le premier délai est d'environ 10 secondes à environ 5 minutes, de préférence d'environ 30 secondes à environ 2 minutes, et de manière davantage préférée d'environ 45 secondes à environ 1,5 minutes.

25. Structure d'aéronef selon l'une quelconque des revendications 1 à 24, dans laquelle la puissance fournie à la feuille de graphite expansé monolithique souple (120) de la bande thermiquement conductrice (2, 76) à la fin du premier délais est suffisante pour maintenir la température de la couche thermiquement conductrice externe au niveau des première et seconde zones d'accumulation et d'évacuation du givre (82, 84, 123, 124) à une température supérieure à 32 °F (0 °C), de préférence dans une plage d'environ 34 °F à environ 40 °F (environ 1,1°C à environ 4,5 °C), pendant un second délais, de préférence d'environ 5 secondes à environ 60 secondes, suffisante pour faire fondre la liaison givre-surface et pour permettre au givre formé d'être évacué en un courant d'air convergeant.

26. Structure d'aéronef selon l'une quelconque des revendications 1 à 25, dans laquelle la bande thermiquement conductrice (2, 76) comprend en outre une couche isolante électriquement (128), dans laquelle la couche de graphite expansé souple (120) est disposée entre la couche thermiquement conductrice externe (22, 130) et la couche isolante (128), qui de préférence est un composant de la bande thermiquement conductrice (2, 76) ou est un composant de la surface de l'aéronef.

27. Structure d'aéronef selon la revendication 26, dans laquelle la couche isolante (128) est un isolant thermique.

28. Structure d'aéronef selon la revendication 26 ou 27, dans laquelle la couche isolante (128) a une épaisseur d'environ 0,005 à 0,250 pouce (environ 0,127 à environ 6,35 mm).

29. Structure d'aéronef selon l'une quelconque des revendications 1 à 28, dans laquelle la structure comprend une pale de rotor ou une pale d'hélice et la bande thermiquement conductrice (2, 76) comprend en outre une couche externe résistant à la corrosion (135), qui comprend de préférence un métal choisi dans le groupe constitué par le titane, le nickel, l'aluminium, l'acier inoxydable, et leurs alliages, collés à la couche thermiquement conductrice externe (22, 130).

30. Bande thermiquement conductrice (2, 76) ayant une longueur et comprenant au moins deux couches stratifiées l'une sur l'autre par la chaleur et sous pression, les couches comprenant (i) une couche thermiquement conductrice externe (22, 130) qui est un isolant électrique et (ii) une couche électriquement et thermiquement conductrice non métallique, la couche électriquement et thermiquement conductrice non métallique consistant en une feuille de graphite expansé monolithique souple (120) et ayant une première partie le long de la longueur de la bande comprenant une première épaisseur, et une deuxième partie contiguë à la première partie le long de la longueur de la bande comprenant une deuxième épaisseur, et une troisième partie contiguë à la première partie le long de la longueur de la bande et comprenant une troisième épaisseur, dans laquelle la première partie est disposée entre les deuxième et troisième parties, et
dans laquelle l'épaisseur de la feuille de graphite expansé monolithique souple (120) dans la première partie est supérieure à l'épaisseur de la feuille dans chacune des deuxième et troisième parties.

31. Bande thermiquement conductrice (2, 76) selon la revendication 30, dans laquelle la feuille de graphite expansé monolithique souple (120) est une feuille continue qui comprend un gradient décroissant d'épaisseurs entre les première et deuxième parties et entre les première et troisième parties.

32. Bande thermiquement conductrice (2, 76) selon la revendication 30 ou 31, dans laquelle l'épaisseur de la feuille de graphite expansé monolithique souple (120) dans la première partie, à l'exclusion des gradients d'épaisseurs décroissants, est d'environ 0,005 à environ 0,060 pouce (environ 0,127 mm à environ 1,524 mm).

33. Bande thermiquement conductrice (2, 76) selon l'une quelconque des revendications 30 à 32, dans laquelle les épaisseurs de la feuille de graphite expansé monolithique souple (120) dans les deuxième et troisième parties, à l'exclusion des gradients d'épaisseurs, sont les mêmes ou différentes les unes des autres et sont dans la plage d'environ 0,001 à environ 0,050 pouce (environ 0,025 mm à environ 1,27 mm).

34. Bande thermiquement conductrice (2, 76) selon la revendication 33, dans laquelle les épaisseurs de la feuille (120) dans les deuxième et troisième parties sont dans la plage d'environ 0,001 à environ 0,030 pouce (environ 0,025 à environ 0,762 mm).

35. Bande thermiquement conductrice (2, 76) selon l'une quelconque des revendications 30 à 34, dans laquelle les première et/ou troisième parties de la feuille de graphite expansé monolithique souple (120) sont séparées de la première partie par un écartement non supérieur à 60 millièmes de pouce (1,524 mm).

36. Bande thermiquement conductrice (2, 76) selon l'une quelconque des revendications 30 à 35, dans laquelle la première partie ou au moins une parmi les deuxième et troisième parties de la feuille de graphite expansé monolithique souple (120) comprend un gradient décroissant d'épaisseurs entre la première partie et la deuxième partie et entre la première partie et la troisième partie.

37. Bande thermiquement conductrice (2, 76) selon l'une quelconque des revendications 30 à 36, dans laquelle la feuille de graphite expansé monolithique souple (120) a une résistivité électrique d'environ $2,7 \times 10^{-4}$ à environ $3,2 \times 10^{-4}$ ohm-pouce (environ $6,85 \times 10^{-4}$ à environ $8,13 \times 10^{-4}$ ohm-cm), de préférence d'environ $3,1 \times 10^{-4}$ ohm-pouce (environ $7,87 \times 10^{-4}$ ohm-cm).

38. Bande thermiquement conductrice (2, 76) selon l'une quelconque des revendications 30 à 37, dans laquelle la couche thermiquement conductrice externe (22, 130) est choisie dans un groupe constitué par des matériaux isolants électriquement ayant une résistivité volumique d'environ $10^3$ ohm-pouce à environ $10^{12}$ ohm-pouce (environ $2,74 \times 10^3$ ohm-cm à environ $2,74 \times 10^{12}$ ohm-cm).

39. Bande thermiquement conductrice (2, 76) selon la revendication 38, dans laquelle la couche thermiquement conductrice externe (22, 130) comprend un thermoplastique ou matériau thermodurcissable et un matériau de remplissage inorganique, qui est de préférence choisi dans le groupe constitué par le nitrure d'aluminium, le nitrure de bore, l'alumine, le nitrure de silicium, et leurs mélanges, qui conduit la chaleur.

40. Bande thermiquement conductrice (2, 76) selon la revendication 38 ou 39, dans laquelle le matériau comprend du polyuréthane.

41. Bande thermiquement conductrice (2, 76) selon l'une quelconque des revendications 30 à 40, dans laquelle la couche thermiquement conductrice externe (22, 130) a une conductivité thermique entre environ 0,1 W/M K à environ 5 W/M K, de préférence d'environ 0,5 W/M K à environ 4 W/M K.

42. Bande thermiquement conductrice (2, 76) selon l'une quelconque des revendications 30 à 41, dans laquelle la couche thermiquement conductrice externe (22, 130) à une épaisseur d'environ 0,0001 à environ 0,030 pouce (environ 0,002 mm à environ 0,762 mm), de préférence d'environ 0,001 à environ 0,010 pouce (d'environ 0,025 mm à environ 0,25 mm), et de manière davantage préférée d'environ 0,005 pouce (environ 0,127 mm).

43. Bande thermiquement conductrice (2, 76) selon l'une quelconque des revendications 30 à 42, dans laquelle la bande est produite par calandrage ou par pressage vertical.

44. Bande thermiquement conductrice (2, 76) selon l'une quelconque des revendications 30 à 43, comprenant en outre une couche isolante électriquement (128), dans laquelle la feuille de graphite expansé monolithique souple (120) est disposée entre la couche thermiquement conductrice externe (22, 130) et la couche isolante (128), qui de préférence est un isolant thermique.

45. Bande thermiquement conductrice (2, 76) selon la revendication 44, dans laquelle la couche isolante (128) est collée à la feuille de graphite expansé monolithique souple (120) au moyen d'un adhésif.

46. Bande thermiquement conductrice (2, 76) selon l'une quelconque des revendications 30 à 45, dans laquelle la première partie a une largeur d'environ 0,25 à environ 3 pouces (environ 0,63 cm à environ 7,62 cm), de préférence d'environ 0,5 à environ 2,5 pouces (environ 1,27 cm à environ 6,35 cm), et de manière davantage préférée d'environ 0,75 à environ 1,5 pouces (environ 1,9 cm à environ 3,8 cm).

47. Bande thermiquement conductrice (2, 76) selon l'une quelconque des revendications 30 à 46, dans laquelle les deuxième et troisième parties ont les largeurs qui sont les mêmes ou qui sont différentes les unes des autres et dans une plage d'environ 1 à environ 6 pouces (environ 2,54 cm à environ 15,24 cm), de préférence d'environ 1,5 à environ 5 pouces (environ 3,8 à environ 12,7 cm) et de manière davantage préférée d'environ 1 à environ 3 pouces (environ 2,54 cm à environ 7,62 cm).

**48.** Bande thermiquement conductrice (2, 76) selon l'une quelconque des revendications 30 à 47, comprenant en outre une couche externe résistant à la corrosion (135) collée à la couche thermiquement conductrice externe (22, 130).

**49.** Bande thermiquement conductrice (2, 76) selon l'une quelconque des revendications 30 à 48, dans laquelle la couche externe résistant à la corrosion (135) est collée à la couche thermiquement conductrice externe (22, 130) au moyen d'un adhésif.

**50.** Bande thermiquement conductrice (2, 76) selon la revendication 48 ou 49,
dans laquelle la couche externe résistant à la corrosion (135) comprend un métal choisi dans le groupe constitué par le titane, le nickel, l'aluminium, l'acier inoxydable, et leurs alliages.

**51.** Bande thermiquement conductrice (2, 76) selon l'une quelconque des revendications 30 à 50, dans laquelle la bande est collée à une surface comportant un bord d'attaque (74, 104, 131) d'une structure d'aéronef, et dans laquelle la couche de feuille de graphite expansé monolithique souple (120) est connectée à une source de puissance, pour enlever le givre de façon électrothermique, ou pour empêcher la formation de givre sur la surface au cours d'un vol.

**52.** Structure d'aéronef comprenant une surface qui comporte un bord d'attaque (74, 104, 131) et une bande thermiquement conductrice (2, 76) collée à la surface pour enlever le givre de façon électrothermique, ou pour empêcher la formation du givre sur la surface, la bande thermiquement conductrice (2, 76) comprenant une première partie qui forme un ruban de séparation (80, 122) ayant une longueur disposée dans le sens de l'envergure le long du bord d'attaque (74, 104, 131), une deuxième partie disposée dans le sens de l'envergure au-dessus et à l'arrière du ruban de séparation (80, 122, 142) formant une première zone d'accumulation et d'évacuation du givre (82, 123, 143), et une troisième partie disposée dans le sens de l'envergure en dessous et à l'arrière du ruban de séparation (80, 122, 142), formant une seconde zone d'accumulation et d'évacuation du givre (84, 124, 144),
dans laquelle la bande thermiquement conductrice (2, 76) comprend au moins deux couches stratifiées l'une sur l'autre par la chaleur et sous pression, les couches comprenant (i) une couche thermiquement conductrice externe (22, 130) qui est un isolant électrique, et (ii) une couche électriquement et thermiquement conductrice non métallique connectée à une source de puissance, la couche électriquement et thermiquement conductrice non métallique consistant en au moins deux feuilles de graphite expansé monolithique souples (132, 133) en couches et une couche inférieure (134) de feuille ayant une première épaisseur dans le ruban de séparation (80, 122, 142), une deuxième épaisseur dans la première zone d'accumulation et d'évacuation du givre (82, 123, 143) et une troisième épaisseur dans la seconde zone d'accumulation d'évacuation du givre (84, 124, 144),
dans laquelle la première épaisseur est supérieure à l'épaisseur de chacune des deuxième et troisième épaisseurs.

**53.** Structure d'aéronef selon la revendication 52, dans laquelle les couches sont façonnées de façon à former un gradient décroissant d'épaisseurs (125, 145) entre le ruban de séparation (80, 122, 142) et la première zone d'accumulation et d'évacuation du givre (82, 123, 143) et un gradient décroissant d'épaisseur (126, 146) entre le ruban de séparation (80, 122, 142) et la seconde zone d'accumulation et d'évacuation du givre (84, 124, 144), respectivement.

**54.** Structure d'aéronef selon la revendication 52 ou 53, dans laquelle les feuilles (132, 133) ont des épaisseurs qui sont mutuellement identiques ou différentes et sont situées dans la plage allant d'environ 0,0025 à environ 0,047 pouce (environ 0,063 à environ 1,2 mm).

**55.** Structure d'aéronef selon l'une quelconque des revendications 52 à 54, dans laquelle les feuilles de graphite expansé monolithique souples (132, 133) et la couche inférieure (134) de feuille comprennent au moins deux sections séparées choisies dans le groupe constitué par une section de ruban de séparation (80, 122, 142), une première section d'accumulation d'évacuation du givre (82, 123, 143), et une seconde section d'accumulation et d'évacuation du givre (84, 123, 144), dans laquelle les première et/ou seconde sections d'accumulation et d'évacuation du givre (82, 84, 123, 124, 143, 144) sont séparées de la section de ruban de séparation (80, 122, 142) par un écartement (140) non supérieur à 60 millième de pouce (1,524 mm).

**56.** Bande thermiquement conductrice (2, 76) ayant une certaine longueur et comprenant au moins deux couches stratifiées l'une sur l'autre par la chaleur et sous pression, les couches comprenant (i) une couche thermiquement conductrice externe (22, 130) qui est un isolant électrique, et (ii) une couche électriquement et thermiquement conductrice non métallique, la couche électriquement et thermiquement conductrice non métallique consistant en au moins deux feuilles de graphite expansé monolithique souples (132, 133) en couche et une couche inférieure (134) de feuille et ayant une première partie le long de la longueur de la bande comprenant une première épaisseur, et une deuxième partie contiguë à la première partie le long de la longueur de la bande comprenant une deuxième épaisseur, et une troisième partie contiguë à la première partie le long de la longueur de la bande et comprenant une troisième épaisseur, dans laquelle la première partie est disposée entre les deuxième et troisième parties, et dans laquelle l'épaisseur de la première partie est supérieure à l'épaisseur de chacune des épaisseurs des deuxième et troisième parties.

57. Bande thermiquement conductrice (2, 76) selon la revendication 56, dans laquelle les feuilles (132, 133) ont des épaisseurs qui sont mutuellement identiques ou différentes.

58. Bande thermiquement conductrice (2, 76) selon la revendication 56 ou 57, dans laquelle les feuilles (132, 133) en couches forment un gradient décroissant d'épaisseurs entre les première et deuxième parties et entre les première et troisième parties.

59. Bande thermiquement conductrice (2, 76) selon l'une quelconque des revendications 56 à 58 destinée à enlever le givre de façon électrothermique, ou empêcher la formation du givre sur une surface comportant un bord d'attaque (74, 104, 131) d'une structure d'aéronef.

Fig. 1

Fig. 2

Fig. 3A

Fig. 3B

FIG. 4

FIG. 5

Fig. 6

Fig. 7

SPANWISE AXIS

72

74

70

STAGNATION LINE

CHORDWISE AXIS

## FIG. 8

78

76

82

74

84

80

STAGNATION LINE

## FIG. 9

FIG. 10

**FIG. 11**

**FIG. 12**

FIG. 13

FIG. 14

FIG. 15

FIG. 16

FIG. 17

FIG. 18

Fig. 19

Fig. 20

Fig. 21

Veratec
8000855        Fig. 24

Grafoil
.005" 70#

# Time to heat 125 F (51.7°C)

| | |
|---|---|
| (.13mm).005" 70# | |
| (.13mm).005" 90# | |
| (.25mm).010" 70# | |
| (.25mm).010" 90# | |
| (.38mm).015" 50# | |
| (.38mm).015" 70# | |
| (.38mm).015" 90# | |
| (.50mm).020" 70# | |
| (.64mm).025" 70# | |
| (.76mm).030" 50# | |
| (.76mm).030" 70# | |
| (.76mm).030" 90# | |
| (1.52mm).060" 70# | |
| Veratec | |

0  10  20  30  40  50·  60  70  80

seconds

Fig. 22

# Time to cool down from 125 F to 82 F
### (from 51.7°C to 27.8°C)

| | |
|---|---|
| (.13mm).005" 70# | |
| (.13mm).005" 90# | |
| (.25mm).010" 70# | |
| (.25mm).010" 90# | |
| (.38mm).015" 50# | |
| (.38mm).015" 70# | |
| (.38mm).015" 90# | |
| (.50mm).020" 70# | |
| (.64mm).025" 70# | |
| (.76mm).030" 50# | |
| (.76mm).030" 70# | |
| (.76mm).030" 90# | |
| (1.52mm)060" 70# | |
| Veratec | |

0  100  200  300  400  500  600

seconds

Fig. 23

Volts DC/Amps

Fig. 25

Fig. 28

Fig.26

Fig. 27

## THERMOCOUPLE LOCATION
## LEADING EDGE 182R

157   156   155

TOP

151

153

154   152

BOTTOM
**Fig. 29**

## THERMOCOUPLE LOCATION
## LEADING EDGE LANCAIR IV

# Tunnel Top

a3   a2

a1

wing
bottom   b3   b2   wing
top

b1

c3   c2

c1

# Fig.30

Fig. 31

Power Requirements

Fig. 32

TEMP IN DEGREES F (°C)

Fig.33

Watt Density

Fig. 34

Fig. 35

Fig. 36

Fig. 37

ICE BEGINS TO SHED

Fig. 38

Fig.39

Fig. 40